# EUROPEAN PATENT APPLICATION

(11) **EP 4 668 973 A1**
(43) Date of publication of application: **24.12.2025**
(21) Application number: 24756263.0
(22) Date of filing: 07.02.2024
(51) Int. Cl.: H04W 72/23

(54) **CHANNEL STATE INFORMATION ACQUISITION METHOD, TERMINAL, AND NETWORK SIDE DEVICE**

(30) Priority: 17.02.2023 CN 202310141957
(71) Applicant: Vivo Mobile Communication Co., Ltd., Dongguan, Guangdong 523863 (CN)
(72) Inventor: YUAN, Jiangwei, Dongguan, Guangdong 523863 (CN); WU, Hao, Dongguan, Guangdong 523863 (CN); LIU, Hao, Dongguan, Guangdong 523863 (CN); SONG, Yang, Dongguan, Guangdong 523863 (CN)
(74) Representative: dompatent
(86) International application number: PCT/CN2024/076750
(87) International publication number: WO 2024/169890

(57) **Abstract**

This application pertains to the field of communication technologies, and discloses a method for obtaining channel state information, a terminal, and a network-side device. The method for obtaining channel state information in embodiments of this application includes: obtaining, by a terminal, a first parameter configured by a network-side device for each of K channel state information reference signals CSI-RSs, where K is an integer greater than 1; in a case that first parameters of the K CSI-RSs are not completely the same, determining, by the terminal, a first reference CSI-RS from the K CSI-RSs according to a preset rule or an indication of network higher-layer signaling; and obtaining, by the terminal, channel state information based on a power parameter associated with the first reference CSI-RS, where the power parameter is used for obtaining power information needed for calculating the channel state information.

## Description

This application claims priority to Chinese Patent Application No. 202310141957.7, filed with the China National Intellectual Property Administration on February 17, 2023 and entitled "METHOD FOR OBTAINING CHANNEL STATE INFORMATION, TERMINAL, AND NETWORK-SIDE DEVICE", which is incorporated herein by reference in its entirety.

### TECHNICAL FIELD

This application pertains to the field of communication technologies, and specifically, relates to a method for obtaining channel state information, a terminal, and a network-side device.

### BACKGROUND

During communication between a terminal and a network-side device, the terminal needs to feed back channel state information (Channel State Information, CSI) to the network-side device. In the related art, a network-side device may configure a plurality of channel state information reference signals (Channel State Information-Reference Signal, CSI-RS) for a terminal, and the terminal measures the CSI-RSs to obtain CSI information of a plurality of time-domain units. However, in the related art, when the terminal obtains the CSI information by using the plurality of CSI-RSs, because the plurality of CSI-RSs are associated with a plurality of fields, a plurality of parameters, or a plurality of pieces of higher-layer signaling, only some parameters may be the same. Currently, no effective solution is provided for how to obtain the CSI information by the terminal in this case.

### SUMMARY

Embodiments of this application provide a method for obtaining channel state information, a terminal, and a network-side device, to resolve a problem about how to obtain CSI information in a case that a plurality of CSI-RSs are associated with a plurality of fields, a plurality of parameters, or a plurality of pieces of higher-layer signaling, and only some parameters may be the same.

According to a first aspect, a method for obtaining channel state information. The method is performed by a terminal, and the method includes: obtaining, by the terminal, a first parameter configured by a network-side device for each of K channel state information reference signals CSI-RSs, where K is an integer greater than 1; in a case that first parameters of the K CSI-RSs are not completely the same, determining, by the terminal, a first reference CSI-RS from the K CSI-RSs according to a preset rule or an indication of network higher-layer signaling; and obtaining, by the terminal, channel state information based on a power parameter associated with the first reference CSI-RS, where the power parameter is used for obtaining power information needed for calculating the channel state information.

According to a second aspect, a method for determining a CSI-RS transmitting order is provided. The method is performed by a terminal, and the method includes: obtaining, by the terminal, a configuration parameter configured by a network-side device for K CSI-RSs, where K is an integer greater than 1; and determining, by the terminal, a transmitting order of the K CSI-RSs based on first information, where the first information includes at least one of the following: configuration information of the network-side device or a default rule.

According to a third aspect, a CSI-RS configuration method is provided. The method is performed by a network-side device, and the method includes: configuring, by the network-side device, a first parameter of each of K channel state information reference signals CSI-RSs for a terminal, where K is an integer greater than 1, where in a case that first parameters of the K CSI-RSs are not completely the same, the terminal is indicated to determine a first reference CSI-RS from the K CSI-RSs according to a preset rule or an indication of network higher-layer signaling, and then obtain channel state information based on a power parameter associated with the first reference CSI-RS, where the power parameter is used for obtaining power information needed for calculating the channel state information.

According to a fourth aspect, a method for indicating a CSI-RS transmitting order is provided. The method is performed by a network-side device, and the method includes: configuring, by the network-side device, K channel state information reference signals CSI-RSs for a terminal, where K is an integer greater than 1; and configuring, by the network-side device for the terminal, configuration information for determining a transmitting order of the K CSI-RSs.

According to a fifth aspect, an apparatus for obtaining channel state information is provided, and includes: a first obtaining module, configured to obtain a first parameter configured by a network-side device for K channel state information reference signals CSI-RSs, where K is an integer greater than 1; a first determining module, configured to: in a case that first parameters of the K CSI-RSs are not completely the same, determine a first reference CSI-RS from the K CSI-RSs according to a preset rule or an indication of network higher-layer signaling; and a second obtaining module, configured to obtain channel state information based on a power parameter associated with the first reference CSI-RS, where the power parameter is used for obtaining power information needed for calculating the channel state information.

According to a sixth aspect, an apparatus for determining a CSI-RS transmitting order is provided, and includes: a third obtaining module, configured to obtain a configuration parameter configured by a network-side device for K CSI-RSs, where K is an integer greater than 1; and a second determining module, configured to determine a transmitting order of the K CSI-RSs based on first information, where the first information includes at least one of the following: configuration information of the network-side device or a default rule.

According to a seventh aspect, a CSI-RS configuration apparatus is provided, and includes: a fourth obtaining module, configured to obtain a first parameter of each of K CSI-RSs, where K is an integer greater than 1; and a first configuration module, configured to configure the first parameter of each of the K CSI-RSs for a terminal, where in a case that first parameters of the K CSI-RSs are not completely the same, the terminal is indicated to determine a first reference CSI-RS from the K CSI-RSs according to a preset rule or an indication of network higher-layer signaling, and then obtain channel state information based on a power parameter associated with the first reference CSI-RS, where the power parameter is used for obtaining power information needed for calculating the channel state information.

According to an eighth aspect, an apparatus for indicating a CSI-RS transmitting order is provided, and includes: a second configuration module, configured to configure K channel state information reference signals CSI-RSs for a terminal, where K is an integer greater than 1; and a third configuration module, configured to configure, for the terminal, configuration information for determining a transmitting order of the K CSI-RSs.

According to a ninth aspect, a terminal is provided. The terminal includes a processor and a memory. The memory stores a program or instructions capable of running on the processor. When the program or the instructions are executed by the processor, the steps of the method according to the first aspect are implemented, or the steps of the method according to the second aspect are implemented.

According to a tenth aspect, a network-side device is provided. The network-side device includes a processor and a memory. The memory stores a program or instructions capable of running on the processor. When the program or the instructions are executed by the processor, the steps of the method according to the third aspect are implemented, or the steps of the method according to the fourth aspect are implemented.

According to an eleventh aspect, a system for obtaining channel state information is provided, and includes a terminal and a network-side device. The terminal is configured to implement the steps of the method according to the first aspect, and the network-side device is configured to implement the steps of the method according to the third aspect; or the terminal is configured to implement the steps of the method according to the second aspect, and the network-side device is configured to implement the steps of the method according to the fourth aspect.

According to a twelfth aspect, a readable storage medium is provided. The readable storage medium stores a program or instructions. When the program or the instructions are executed by a processor, the steps of the method according to the first aspect are implemented, or the steps of the method according to the second aspect are implemented, or the steps of the method according to the third aspect are implemented, or the steps of the method according to the fourth aspect are implemented.

According to a thirteenth aspect, a chip is provided. The chip includes a processor and a communication interface. The communication interface is coupled to the processor. The processor is configured to run a program or instructions, to implement the method according to the first aspect, or implement the method according to the second aspect, or implement the method according to the third aspect, or implement the steps of the method according to the fourth aspect.

According to a fourteenth aspect, a computer program/program product is provided. The computer program/program product is stored in a storage medium. The computer program/program product is executed by at least one processor, to implement the steps of the method according to the first aspect, or implement the method according to the second aspect, or implement the steps of the method according to the third aspect, or implement the steps of the method according to the fourth aspect.

In the embodiments of this application, a terminal obtains a first parameter configured by a network-side device for each of K CSI-RSs, and when first parameters of the K CSI-RSs are not completely the same, the terminal determines a first reference CSI-RS from the K CSI-RSs according to a preset rule or an indication of network higher-layer signaling, and then obtains channel state information based on the determined first reference CSI-RS. CSI information can be obtained based on the first reference CSI-RS in a case that a plurality of CSI-RSs are associated with a plurality of fields, a plurality of parameters, or a plurality of pieces of higher-layer signaling, and only some parameters may be the same.

### BRIEF DESCRIPTION OF THE DRAWINGS

FIG. 1 is a diagram of a wireless communication system to which embodiments of this application are applied;
FIG. 2 is a schematic flowchart of a method for obtaining channel state information according to an embodiment of this application;
FIG. 3 is a schematic flowchart of a method for determining a CSI-RS transmitting order according to an embodiment of this application;
FIG. 4 is a schematic flowchart of a method for obtaining channel state information according to an embodiment of this application;
FIG. 5 is a schematic flowchart of a CSI-RS configuration method according to an embodiment of this application;
FIG. 6 is a schematic flowchart of a method for indicating a CSI-RS transmitting order according to an embodiment of this application;
FIG. 7 is a diagram of a structure of an apparatus for obtaining channel state information according to an embodiment of this application;
FIG. 8 is a diagram of a structure of an apparatus for determining a CSI-RS transmitting order according to an embodiment of this application;
FIG. 9 is a diagram of a structure of a CSI-RS configuration apparatus according to an embodiment of this application;

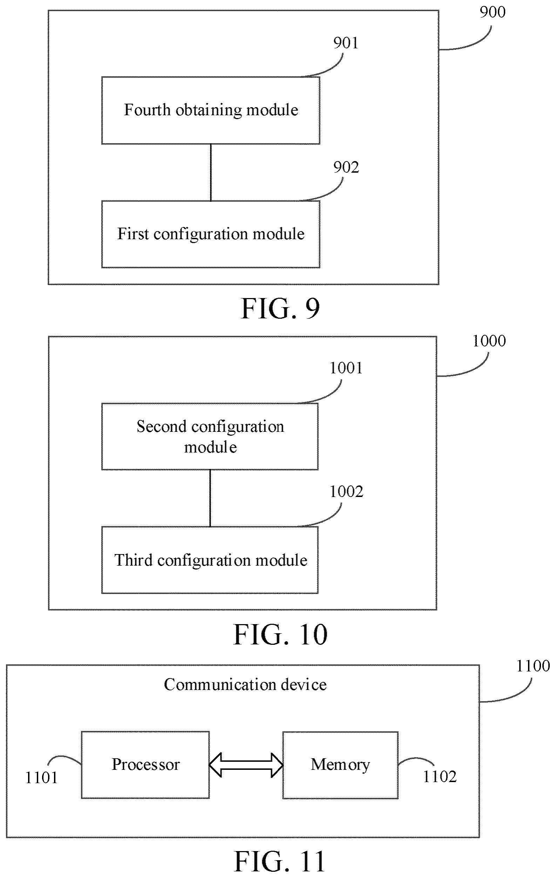

FIG. 9 is a diagram of a structure of a CSI-RS configuration apparatus according to an embodiment of this application;
FIG. 10 is a diagram of a structure of an apparatus for indicating a CSI-RS transmitting order according to an embodiment of this application;
FIG. 11 is a diagram of a structure of a communication device according to an embodiment of this application;

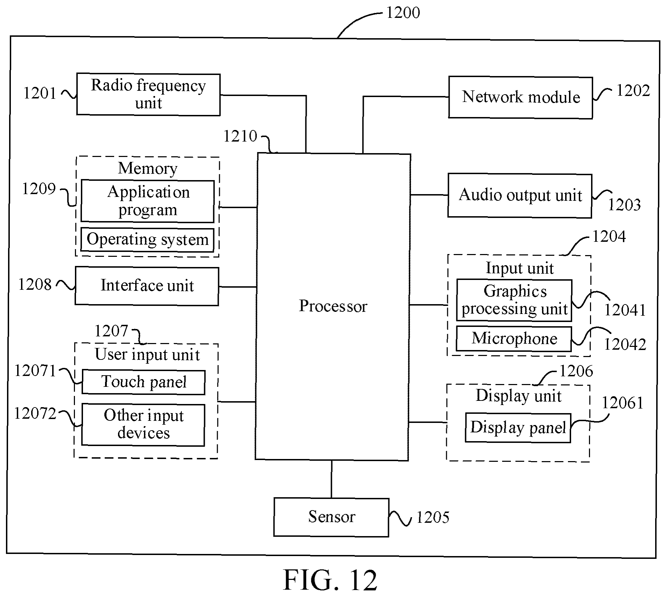

FIG. 12 is a diagram of a hardware structure of a terminal according to an embodiment of this application; and

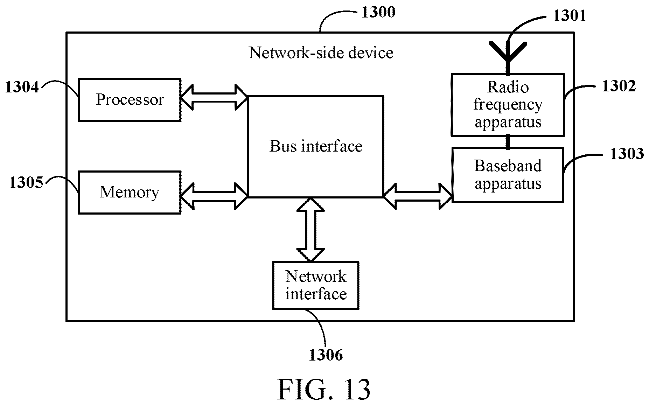

FIG. 13 is a diagram of a hardware structure of a network-side device according to an embodiment of this application.

### DETAILED DESCRIPTION

The following clearly describes the technical solutions in the embodiments of this application with reference to the accompanying drawings in the embodiments of this application. Clearly, the described embodiments are some but not all of the embodiments of this application. All other embodiments obtained by persons of ordinary skill in the art based on the embodiments of this application fall within the protection scope of this application.

The terms "first", "second", and the like in this application are intended to distinguish between similar objects, but do not necessarily indicate a specific order or sequence. It should be understood that terms used in this way are interchangeable in appropriate circumstances so that the embodiments of this application can be implemented in other orders than the order illustrated or described herein. In addition, "first" and "second" are usually used to distinguish between objects of a same type, and do not limit a quantity of objects. For example, there may be one or more first objects. In addition, "or" in this application indicates at least one of connected objects. For example, "A or B" covers three solutions: Solution 1: A is included, and B is not included. Solution 2: B is included, and A is not included. Solution 3: Both A and B are included. The character "/" usually indicates an "or" relationship between associated objects.

The term "indication" in this application may be a direct indication (namely, an explicit indication), or may be an indirect indication (namely, an implicit indication). The direct indication may be understood as that a sender explicitly notifies, in a sent indication, a receiver of specific information, an operation that needs to be performed, a request result, or other content. The indirect indication may be understood as that a receiver determines corresponding information based on an indication sent by a sender; or performs determining, and determines, based on a determining result, an operation that needs to be performed, a request result, or the like.

It should be noted that technologies described in the embodiments of this application are not limited to a long term evolution (Long Term Evolution, LTE)/LTE-advanced (LTE-Advanced, LTE-A) system, and may also be applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), or other systems. The terms "system" and "network" in the embodiments of this application are often used interchangeably, and the technology described herein may be used in the aforementioned systems and radio technologies as well as other systems and radio technologies. In the following descriptions, a new radio (New Radio, NR) system is described for an illustration purpose, and NR terms are used in most of the following descriptions, but these technologies may also be applied to systems other than the NR system, for example, a sixth-generation (6^{th} Generation, 6G) communication system.

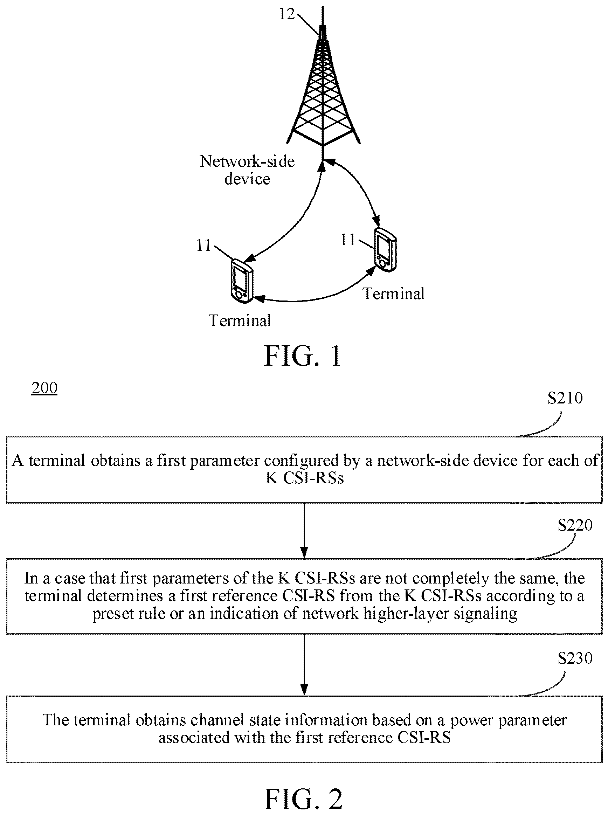

FIG. 1 is a block diagram of a wireless communication system to which the embodiments of this application are applicable. The wireless communication system includes a terminal 11 and a network-side device 12. The terminal 11 may be a terminal-side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), a flight vehicle (flight vehicle), an in-vehicle device (Vehicle User Equipment, VUE), a shipborne device, a pedestrian terminal (Pedestrian User Equipment, PUE), a smart home appliance (a home appliance with a wireless communication function, for example, a refrigerator, a television, a washing machine, or furniture), a game console, a personal computer (Personal Computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart ankle chain, or the like), a smart wristband, smart clothing, or the like. The in-vehicle device may also be referred to as an in-vehicle terminal, an in-vehicle controller, an in-vehicle module, an in-vehicle component, an in-vehicle chip, an in-vehicle unit, or the like. It should be noted that a specific type of the terminal 11 is not limited in the embodiments of this application. The network-side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (NodeB, NB), an evolved NodeB (Evolved NodeB, eNB), a next-generation NodeB (the next generation NodeB, gNB), a new radio NodeB (New Radio NodeB, NR NodeB), an access point, a relay station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved NodeB), a transmission reception point (Transmission Reception Point, TRP), or another appropriate term in the art. Provided that the same technical effects are achieved, the base station is not limited to a specific technical term. It should be noted that a base station in an NR system is used only as an example for description in the embodiments of this application, but a specific type of the base station is not limited.

In a related protocol, it is agreed upon in Release 18 (Release 18, Rel-18) of the 3rd generation partnership project (3rd Generation Partnership Project, namely, 3GPP) that a terminal obtains precoding matrix indicator (Precoding Matrix Indicator, PMI) information and channel quality indicator (Channel Quality Indicator, CQI) information of a plurality of time-domain units by using K CSI-RSs. The CQI information may be associated with one time-domain unit, or may be associated with a plurality of time-domain units.

A non-zero power channel state information reference signal (Non-Zero Power CSI-RS, NZP CSI-RS) is indicated by higher-layer parameters CSI-ResourceConfig and NZP-CSI-RS-ResourceSet. One or more NZP CSI-RS resource sets may be configured for UE. Each NZP CSI-RS resource set includes K (≥1) NZP CSI-RS resource(s).

CSI-RS resources in a same resource set other than an NZP CSI-RS resource used for interference measurement are configured with same density and a same quantity of ports. The UE expects a same starting resource block (Resource Block, RGB), a same quantity of RBs, and a same code division multiplexing (code division multiplexing, cdm) type (a spreading mode for a CSI-RS reference signal) to be configured for all CSI-RS resources in a resource set.

The following describes periodicities and slot offsets (slot offset) of different types of CSI-RS signals.

For a periodic or semi-persistent CSI-RS, a periodicity and a slot offset of the CSI-RS are configured by using radio resource control (Radio Resource Control, RRC) protocol signaling. CSI-RSs in a same resource set have a same periodicity but may have different slot offsets.

An aperiodic CSI-RS may be triggered by downlink control information (Downlink Control Information, DCI), and a candidate value of a slot offset of the CSI-RS is independently configured by RRC signaling in each resource set (Resource Set) in a measurement resource setting (Resource Setting).

Higher-layer signaling NZP-CSI-RS-Resource includes the following fields: nzp-CSI-RS-ResourceId, resourceMapping, powerControlOffset, powerControlOffsetSS, scramblingID, periodicityAndOffset, and qcl-InfoPeriodicCSI-RS.

Higher-layer signaling CSI-RS-ResourceMapping includes the following fields: frequencyDomainAllocation, nrofPorts, firstOFDMSymbolInTimeDomain, firstOFDMSymbolInTimeDomain2, cdm-Type, density, and freqBand.

Higher-layer signaling NZP-CSI-RS-ResourceSet includes the following fields: nzp-CSI-ResourceSetId, nzp-CSI-RS-Resources, repetition, aperiodicTriggeringOffset, and trs-Info.

Obtaining CSI information by using a plurality of CSI-RSs is a common technical solution, but a current solution has the following problem: The following case is not considered: Among a plurality of fields, a plurality of parameters, or a plurality of pieces of higher-layer signaling associated with K CSI-RSs, some parameters may be the same, or only some parameters of a CSI-RS can be used for obtaining CSI information. Consequently, correct CSI information may not be obtained. In addition, in the related art, a transmitting order of the K CSI-RSs is not specified. Therefore, a terminal and a network cannot understand a transmitting order consistently. Consequently, the terminal cannot accurately receive the CSI-RSs, and therefore cannot obtain correct CSI information. In view of the foregoing problems, the embodiments of this application provide a method for obtaining channel state information and a method for determining a CSI-RS transmitting order.

The following describes in detail the technical solutions provided in the embodiments of this application with reference to the accompanying drawings and by using some embodiments and application scenarios thereof.

FIG. 2 is a schematic flowchart of a method 200 for obtaining channel state information according to an embodiment of this application. The method may be performed by a terminal. In other words, the method may be performed by software or hardware installed on the terminal. As shown in FIG. 2, the method 200 includes the following steps.

S210: The terminal obtains a first parameter configured by a network-side device for each of K CSI-RSs.

In this embodiment of this application, K is an integer greater than 1. To be specific, the network-side device configures at least two CSI-RSs and a first parameter of each CSI-RS.

In S210, the terminal may receive the first parameter configured by the network-side device for each of the K CSI-RSs, and the K CSI-RSs are CSI-RSs used for the terminal to obtain CSI. For example, the network-side device may configure first parameters of the K CSI-RSs through higher-layer signaling.

In an implementation, the first parameter may specifically include at least one of the following (1) to (4).
(1) A first identifier, namely, a CSI-RS-ID, used for indicating an identifier of a CSI-RS, for example, nzp-CSI-RS-ResourceId.
   It can be understood that, when the network-side device configures a plurality of CSI-RS resources, for ease of distinguishing by the terminal, each CSI-RS is configured with identification information, and the identification information includes the first identifier. Specifically, the first identifier of the CSI-RS may be a port set number or a CSI-RS port number.
(2) A pattern configuration, used for indicating at least one of the following: a symbol position occupied by a CSI-RS in a slot, a subcarrier position occupied by a CSI-RS in a (Physical Resource Block, PRB), or a frequency-domain position of a CSI-RS in a carrier or a bandwidth part (Bandwidth Part, BWP). For example, a resource mapping (ResourceMapping) may include at least one of the following:
   a symbol position occupied by a CSI-RS in a slot;
   a subcarrier position occupied by a CSI-RS in a physical resource block (PRB); or
   a frequency-domain (or resource block (Resource Block, RB)) position of a CSI-RS in a carrier or a bandwidth part (Band Width Part, BWP).
(3) A power parameter, used for indicating power information associated with a CSI-RS. The power information may specifically include information about power allocation on a CSI-RS.
   For example, the power parameter may include a first power control offset (powerControlOffset) and a second power control offset (powerControlOffsetSS). The first power control offset may be a power offset of average transmit power of a physical downlink shared channel resource element (Physical Downlink Shared Channel Resource Element, PDSCH RE) to average transmit power of a non-zero power channel state information reference signal resource element (Non-Zero Power CSI-RS Resource Element, NZP CSI-RS RE). The second power control offset may be a power offset of the average transmit power of the NZP CSI-RS RE to average transmit power of a Synchronization Signal and PBCH block Resource Element (Synchronization Signal and PBCH block Resource Element, SS/PBCH block) RE.
(4) A second identifier, used for indicating a scrambling identifier, namely, a scrambling ID (scramblingID), associated with a CSI-RS.

It can be understood that, when the network-side device configures a plurality of CSI-RS resources, each CSI-RS includes at least one associated scrambling identifier, namely, a scrambling identifier ID. The scrambling ID is used for generating an initial sequence of a pseudorandom sequence corresponding to a reference signal, and the scrambling ID may be explicitly specified in a protocol, or may be obtained by using a method of being agreed upon by the network device and the terminal.

S220: In a case that the first parameters of the K CSI-RSs are not completely the same, the terminal determines a first reference CSI-RS from the K CSI-RSs according to a preset rule or an indication of network higher-layer signaling.

After obtaining the first parameters configured by the network-side device for the K channel state information reference signals CSI-RSs, the terminal may perform determining on the first parameters of the K CSI-RSs, and in the case of determining that the first parameters of the K CSI-RSs are not completely the same, may determine the first reference CSI-RS from the K CSI-RSs according to the preset rule or the indication of the network higher-layer signaling, where the first reference CSI-RS is used for determining CSI information. It should be noted that, in this application, "being not completely the same" includes a case of "being partially the same and partially different", or includes a case of "being completely not the same". For example, first parameters of three CSI-RSs being not completely the same may mean that first parameters of two CSI-RSs are the same, and the first parameter is different from a first parameter of the 3^{rd} CSI-RS; or may mean that all of the first parameters of the three CSI-RSs are different from each other.

In an implementation, the preset rule may specifically include at least one of the following (1) to (4).
(1) A CSI-RS with a largest CSI-RS identifier among the K CSI-RSs is the first reference CSI-RS.
   For example, the CSI-RS identifier may be a CSI-RS ID. In a case that the first parameters of the K CSI-RSs are not completely the same, the terminal determines the CSI-RS with the largest CSI-RS ID among the K CSI-RSs as the first reference CSI-RS.
   For example, if the network-side device configures three CSI-RSs in the NZP-CSI-RS-ResourceSet and CSI-RS IDs of the three CSI-RSs are respectively 4, 2, and 5, the terminal determines, according to the foregoing rule, a CSI-RS with a CSI-RS ID of 5 in the CSI-RS set as the first reference CSI-RS.
(2) A CSI-RS with a smallest CSI-RS identifier among the K CSI-RSs is the first reference CSI-RS.
   For example, if the network-side device configures three CSI-RSs in the NZP-CSI-RS-ResourceSet and CSI-RS IDs of the three CSI-RSs are respectively 4, 2, and 5, the terminal determines, according to the foregoing rule, a CSI-RS with a CSI-RS ID of 2 in the CSI-RS set as the first reference CSI-RS.
(3) The 1^{st} configured CSI-RS in first configuration signaling is the first reference CSI-RS, where the first configuration signaling is used for configuring the K CSI-RSs.
   For example, the first configuration signaling may be the higher-layer signaling NZP-CSI-RS-ResourceSet. During CSI-RS resource configuration, a plurality of CSI-RS resources may be configured by using one NZP-CSI-RS-ResourceSet. Therefore, the 1^{st} configured CSI-RS may be selected as the first reference CSI-RS.
   For example, it is assumed that three CSI-RSs are sequentially configured in the first configuration signaling: a CSI-RS 0, a CSI-RS 1, and a CSI-RS 2. In addition, powerControlOffset=-8/powerControlOffsetSS=db0 is configured in the CSI-RS 0, powerControlOffset=-5/powerControlOffsetSS=db3 is configured in the CSI-RS 1, and powerControlOffset=0/powerControlOffsetSS=db3 is configured in the CSI-RS 2. The terminal determines, according to a default rule, that the 1^{st} configured CSI-RS 0 in the CSI-RS set is the first reference CSI-RS, and obtains a channel, predicts a channel, or obtains CSI information such as a CQI with reference to the powerControlOffset=-8/powerControlOffsetSS=db0 configured in the CSI-RS 0.
(4) The last configured CSI-RS in first configuration signaling is the first reference CSI-RS, where the first configuration signaling is used for configuring the K CSI-RSs.

For example, it is assumed that three CSI-RSs are sequentially configured in the first configuration signaling: a CSI-RS 0, a CSI-RS 1, and a CSI-RS 2. In addition, powerControlOffset=-8/powerControlOffsetSS=db0 is configured in the CSI-RS 0, powerControlOffset=-5/powerControlOffsetSS=db3 is configured in the CSI-RS 1, and powerControlOffset=0/powerControlOffsetSS=db3 is configured in the CSI-RS 2. The terminal determines, according to a default rule, that the last configured CSI-RS 2 in the CSI-RS set is the first reference CSI-RS, and the terminal may obtain a channel, predict a channel, or obtain CSI information such as a CQI with reference to the powerControlOffset=0/powerControlOffsetSS=db3 configured in the CSI-RS 2.

S230: The terminal obtains channel state information based on a power parameter associated with the first reference CSI-RS. The power parameter is used for obtaining power information needed for calculating the channel state information.

In this embodiment of this application, the first reference CSI-RS is configured with the power parameter. Therefore, the terminal may obtain the channel state information based on the power parameter associated with the first reference CSI-RS.

In this embodiment of this application, the power parameter may be a power control parameter. The power parameter is used for the terminal to obtain the power information needed for calculating the CSI, and includes but is not limited to a power control offset, for example, the power control offset powerControlOffset and/or powerControlOffsetSS.

For example, the network-side device may configure three CSI-RSs by using the higher-layer signaling NZP-CSI-RS-ResourceSet: a CSI-RS 0, a CSI-RS 1, and a CSI-RS 2. powerControlOffset=-8/powerControlOffsetSS=db0 is configured in the CSI-RS 0, powerControlOffset=-5/powerControlOffsetSS=db3 is configured in the CSI-RS 1, and powerControlOffset=0/powerControlOffsetSS=db3 is configured in the CSI-RS 2. If the terminal determines, according to a default rule, that the CSI-RS 2 in the CSI-RS set is the first reference CSI-RS, the terminal may obtain a channel, predict a channel, or obtain CSI information such as a CQI with reference to the powerControlOffset=0/powerControlOffsetSS=db3 configured in the CSI-RS 2.

In an implementation, in a case that the first parameters of the K CSI-RSs are completely the same, the terminal may obtain channel state information based on a power parameter associated with any one of the K CSI-RSs.

It can be understood that the first parameter may include a power parameter. In a case that the first parameters of the K CSI-RSs are completely the same, the first parameters of the K CSI-RSs include a same power parameter. Therefore, the terminal may obtain the channel state information based on a power parameter associated with any one of the K CSI-RSs.

For example, the first parameter includes a first power control offset powerControlOffset and/or a second power control offset powerControlOffsetSS. To be specific, the K CSI-RSs are configured with a same first power control offset powerControlOffset and a same second power control offset powerControlOffsetSS.

In an implementation, the terminal assumes that the first parameters of the K CSI-RSs are completely the same, and therefore may obtain channel state information based on a power parameter associated with any one of the K CSI-RSs.

It can be understood that the first parameter may include a power parameter. In a case that the terminal assumes that the first parameters of the K CSI-RSs are completely the same, the first parameters of the K CSI-RSs include a same power parameter. Therefore, the terminal may obtain the channel state information based on a power parameter associated with any one of the K CSI-RSs. In this case, the terminal does not expect the first parameters configured by the network for the K CSI-RSs to be not completely the same. Alternatively, when the first parameters configured by the network for the K CSI-RSs are not completely the same, the terminal does not obtain, update, or feed back CSI. Alternatively, when the first parameters configured by the network for the K CSI-RSs are not completely the same, the terminal obtains channel state information according to a default rule by using a part of CSI-RSs that are completely the same.

According to the foregoing technical solution provided in this embodiment of this application, the terminal obtains the first parameter configured by the network-side device for each of the K CSI-RSs. In a case that the first parameters of the K CSI-RSs are not completely the same, the terminal determines the first reference CSI-RS from the K CSI-RSs according to the preset rule or the indication of the network higher-layer signaling, and then obtains the channel state information based on the determined first reference CSI-RS. CSI information can be obtained based on the first reference CSI-RS in a case that a plurality of CSI-RSs are associated with a plurality of fields, a plurality of parameters, or a plurality of pieces of higher-layer signaling, and only some parameters may be the same, to ensure accuracy of the obtained CSI information.

For example, when the network-side device configures K different CSI-RSs for obtaining CSI information, the terminal assumes that the K CSI-RSs have a same power offset parameter (powerControlOffset and/or powerControlOffsetSS), and therefore the terminal obtains CSI information by using a power offset parameter of one of the CSI-RSs.

Alternatively, when the network configures K different CSI-RSs for obtaining CSI information, the terminal assumes that the K CSI-RSs may have different power offset parameters (powerControlOffset and/or powerControlOffsetSS). In this case, the terminal needs to determine a reference CSI-RS, and obtain CSI information with reference to a (powerControlOffset and/or powerControlOffsetSS) associated with the reference CSI-RS. A manner of determining the reference CSI-RS may be one of the following:
A CSI-RS with a largest or smallest CSI-RS ID among the K CSI-RSs is the reference CSI-RS;
the 1^{st} configured CSI-RS or the last configured CSI-RS in the higher-layer signaling NZP-CSI-RS-ResourceSet is the reference CSI-RS;
higher-layer signaling indicates a specific CSI-RS among the K CSI-RSs that serves as the reference CSI-RS;
the 1^{st} sent CSI-RS among the K CSI-RSs is the reference CSI-RS; or
the last sent CSI-RS among the K CSI-RSs is the reference CSI-RS.

In the related art, a transmitting order of the K CSI-RSs is not specified. Therefore, the terminal and the network cannot understand a transmitting order of the CSI-RSs consistently. Therefore, the embodiments of this application further provide a method for determining a CSI-RS transmitting order.

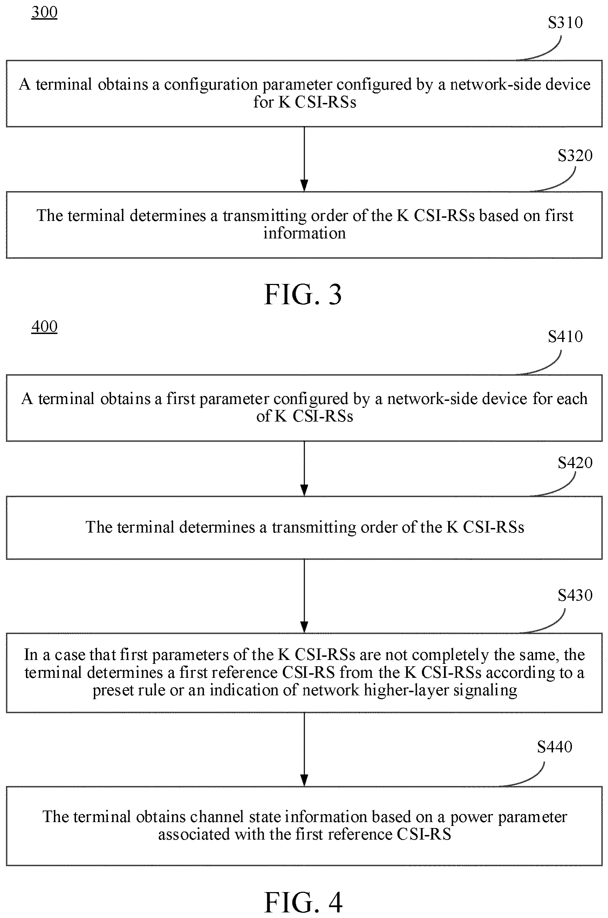

FIG. 3 is a flowchart of a method for determining a CSI-RS transmitting order according to an embodiment of this application. The method 300 may be performed by a terminal. In other words, the method may be performed by software or hardware installed on the terminal. As shown in FIG. 3, the method mainly includes the following steps.

S310: The terminal obtains a configuration parameter configured by a network-side device for K CSI-RSs, where K is an integer greater than 1.

In this embodiment of this application, the network-side device may configure, for the terminal, a plurality of CSI-RSs for obtaining CSI information.

Optionally, in this embodiment of this application, the configuration parameter may include the first parameter in the method 200, and certainly, is not limited thereto. During actual application, the configuration parameter may include a parameter configured by the network-side device for the plurality of CSI-RSs. This is not specifically limited in this embodiment of this application.

S320: The terminal determines a transmitting order of the K CSI-RSs based on first information, where the first information includes at least one of the following: configuration information of the network-side device or a default rule.

Optionally, after determining the transmitting order of the K CSI-RSs, the terminal may receive and measure the CSI-RSs according to the transmitting order, and then obtain CSI information based on a measurement result and a power parameter associated with a first reference CSI-RS.

In this embodiment of this application, to enable the terminal and the network-side device to understand the transmitting order of the K CSI-RSs consistently, the terminal may determine the transmitting order of the K CSI-RSs based on the configuration information of the network-side device and/or the default rule, so that the terminal and the network-side device understand the transmitting order of the K CSI-RSs consistently, to ensure that the terminal can accurately receive the CSI-RSs and obtain correct CSI information.

In an implementation, the network-side device may configure or associate a quantity of time-domain units in a separation between CSI-RSs. In this implementation, that the terminal determines a transmitting order of the K CSI-RSs may include the following steps.

Step 1: The terminal obtains a second parameter m that is configured or associated by the network-side device through first higher-layer signaling.

The second parameter m is used for determining a separation between transmitting time-domain positions associated with two adjacent CSI-RSs, to be specific, the separation is m first time-domain units. Alternatively, the second parameter m is used for determining a separation between transmitting time-domain positions associated with an h^{th} sent CSI-RS and the 1^{st} sent CSI-RS, to be specific, the separation is h×m first time-domain units.

For example, when the network-side device configures the K CSI-RSs to have a same CSI-RS ID (to be specific, the first parameter includes the CSI-RS ID), the network-side device may configure the second parameter m through higher-layer signaling. In this case, the terminal assumes that a separation between transmitting time-domain positions associated with two adjacent CSI-RSs is m first time-domain units. The second parameter m may be configured in higher-layer signaling NZP-CSI-RS-ResourceSet. The first time-domain unit may be a slot, a symbol, or another predefined time-domain length. For example, the network configures K same CSI-RSs for obtaining CSI information. In addition, the network indicates the second parameter m through the higher-layer signaling NZP-CSI-RS-ResourceSet, where m indicates that a time-domain separation between two adjacent CSI-RSs sent by the network is m slots (a difference between slot indexes of two adjacently sent CSI-RSs is m slots). The terminal determines a slot n of the 1^{st} sent CSI-RS based on a slot offset indicated by the higher-layer signaling. In this case, a slot of the 2^{nd} sent CSI-RS is n+m, a slot of the 3^{rd} sent CSI-RS is n+2×m, and so on. Because there are K same CSI-RSs, all sent CSI-RSs have same field information in NZP-CSI-RS-Resource.

For another example, when the network-side device configures K CSI-RSs with first parameters that are not completely the same (for example, CSI-RS IDs are different), the network-side device may also configure the second parameter m through higher-layer signaling. The second parameter m may be configured in higher-layer signaling NZP-CSI-RS-ResourceSet.

Step 2: The terminal obtains the transmitting order of the K CSI-RSs based on the second parameter m and a first default rule, where a separation between transmitting time-domain positions associated with two adjacent CSI-RSs is m first time-domain units.

In the foregoing implementation, when the terminal determines that a separation between transmitting time-domain positions associated with two adjacent CSI-RSs is m first time-domain units, the network-side device may indicate, through higher-layer signaling, a transmitting time-domain position associated with the 1^{st} sent CSI-RS. The terminal obtains the transmitting time-domain position that is associated with the 1^{st} sent CSI-RS and that is indicated by the higher-layer signaling, to obtain a transmitting time-domain position associated with each CSI-RS based on the second parameter m and the transmitting time-domain position associated with the 1^{st} sent CSI-RS. To be specific, a time-domain symbol position associated with an i^{th} sent CSI-RS among the K CSI-RSs is obtained based on a time-domain symbol position associated with a previously sent CSI-RS and m. That is, an i^{th} time-domain symbol position is the time-domain symbol position associated with the previously sent CSI-RS + m.

In an implementation, the first default rule may specifically include at least one of the following (1) to (4).
(1) The K CSI-RSs are sequentially sent in descending order of CSI-RS identifiers (for example, CSI-RS IDs) of the CSI-RSs.
   For example, three CSI-RSs are configured in the higher-layer signaling NZP-CSI-RS-ResourceSet. The 1^{st} configured CSI-RS is a CSI-RS with an ID of 4, the 2^{nd} configured CSI-RS is a CSI-RS with an ID of 2, and the 3^{rd} configured CSI-RS is a CSI-RS with an ID of 5. In this case, a transmitting order of the three CSI-RSs is sequentially as follows: the CSI-RS with an ID of 5, the CSI-RS with an ID of 4, and the CSI-RS with an ID of 2. It is assumed that a transmitting slot for the CSI-RS with an ID of 5 is a slot n. In this case, a transmitting slot for the CSI-RS with an ID of 4 is a slot n+m, and a transmitting slot for the CSI-RS with an ID of 2 is a slot n+2m.
(2) The K CSI-RSs are sequentially sent in ascending order of CSI-RS identifiers of the CSI-RSs.
   For example, three CSI-RSs are configured in the higher-layer signaling NZP-CSI-RS-ResourceSet. The 1^{st} configured CSI-RS is a CSI-RS with an ID of 4, the 2^{nd} configured CSI-RS is a CSI-RS with an ID of 2, and the 3^{rd} configured CSI-RS is a CSI-RS with an ID of 5. In this case, a transmitting order of the three CSI-RSs is sequentially as follows: the CSI-RS with an ID of 2, the CSI-RS with an ID of 4, and the CSI-RS with an ID of 5. It is assumed that a transmitting slot for the CSI-RS with an ID of 2 is a slot n. In this case, a transmitting slot for the CSI-RS with an ID of 4 is a slot n+m, and a transmitting slot for the CSI-RS with an ID of 5 is a slot n+2m.
(3) The K CSI-RSs are sequentially sent from the earliest to the latest according to a configuration order of the CSI-RSs.
   For example, the configuration order of the CSI-RSs may be an order of CSI-RSs configured in the higher-layer signaling NZP-CSI-RS-ResourceSet.
   For example, three CSI-RSs are configured in the higher-layer signaling NZP-CSI-RS-ResourceSet. The 1^{st} configured CSI-RS is a CSI-RS with an ID of 4, the 2^{nd} configured CSI-RS is a CSI-RS with an ID of 2, and the 3^{rd} configured CSI-RS is a CSI-RS with an ID of 5. In this case, a transmitting order of the three CSI-RSs is sequentially as follows: the CSI-RS with an ID of 4, the CSI-RS with an ID of 2, and the CSI-RS with an ID of 5. It is assumed that a transmitting slot for the 1^{st} configured CSI-RS is a slot n. In this case, a transmitting slot for the 2^{nd} configured CSI-RS is a slot n+m, and a transmitting slot for the 3^{rd} configured CSI-RS is a slot n+2m.
(4) The K CSI-RSs are sequentially sent from the latest to the earliest according to a configuration order of the CSI-RSs.

For example, three CSI-RSs are configured in a non-zero CSI-RS resource set NZP-CSI-RS-ResourceSet. The 1^{st} configured CSI-RS is a CSI-RS with an ID of 4, the 2^{nd} configured CSI-RS is a CSI-RS with an ID of 2, and the 3^{rd} configured CSI-RS is a CSI-RS with an ID of 5. In this case, a transmitting order of the three CSI-RSs is sequentially as follows: the CSI-RS with an ID of 5, the CSI-RS with an ID of 2, and the CSI-RS with an ID of 4.

For example, when the network configures K different CSI-RSs for obtaining CSI information, the terminal needs to obtain a transmitting order and transmitting time-domain positions of the K different CSI-RSs. The network indicates the second parameter m to the terminal through the higher-layer signaling NZP-CSI-RS-ResourceSet. The terminal assumes that a time-domain separation between two CSI-RSs sent by the network is m slots. For the transmitting order, that the terminal obtains the transmitting order of the K CSI-RSs according to a default rule includes:
(a) The transmitting order of the K CSI-RSs is sequential transmission in descending order or ascending order of CSI-RS IDs.
(b) The transmitting order of the K CSI-RSs is sequential transmission in descending order or ascending order according to a CSI-RS configuration order.

In another implementation, separations between CSI-RSs may not all be m time-domain units, but vary to some extent. In addition to configuring or associating the second parameter m, the network-side device may further configure a third parameter e configured for or associated with each CSI-RS. Therefore, that the terminal determines the transmitting order of the K CSI-RSs may include the following steps.

Step 1: The terminal obtains a second parameter m configured for or associated with the K CSI-RSs and a third parameter e configured for or associated with each CSI-RS, where the second parameter m and the third parameter e are used for indicating that a separation between a transmitting time-domain position associated with a CSI-RS and a target time-domain position is m×e first time-domain units, and the target time-domain position includes one of the following: a transmitting time-domain position associated with the 1^{st} sent CSI-RS, or a reference time-domain position.

Step 2: The terminal obtains, based on the second parameter m and the third parameter e that are associated with each CSI-RS, a first time-domain unit offset value corresponding to each CSI-RS.

Step 3: The terminal obtains, based on the first time-domain unit offset value corresponding to each CSI-RS, a transmitting time-domain position associated with each CSI-RS.

Step 4: The terminal determines that the K CSI-RSs are to be sent in ascending order of the first time-domain unit offset values.

It can be understood that the terminal may obtain the transmitting order of the K CSI-RSs based on the second parameter m and the third parameter e that are configured by the network-side device. Specifically, the terminal obtains, based on the second parameter m and the third parameter e that are associated with each CSI-RS, the first time-domain unit offset value corresponding to each CSI-RS; and determines the transmitting order according to the ascending order of the offset values, to be specific, sends the K CSI-RSs in ascending order of the first time-domain unit offset values. The first time-domain unit offset is a slot offset, a symbol offset, or another predefined time-domain length.

In the foregoing possible implementation, the terminal may determine, based on higher-layer signaling, a transmitting time-domain position associated with the 1^{st} sent CSI-RS, to obtain the transmitting time-domain position associated with each CSI-RS based on the second parameter m and the third parameter e. Optionally, in a manner, the terminal obtains, through higher-layer signaling, a starting transmitting time-domain position n associated with the K CSI-RSs. In this case, the transmitting time-domain position of each CSI-RS is n+m×e.

For example, it is assumed that three CSI-RSs are configured in the higher-layer signaling NZP-CSI-RS-ResourceSet: a CSI-RS 0, a CSI-RS 1, and a CSI-RS 2. In addition, the second parameter m is further configured, where m is 2. The third parameter e is configured in the CSI-RS 0, where e is 0. The third parameter e is configured in the CSI-RS 1, where e is 1. The third parameter e is configured in the CSI-RS 2, where e is 2. It is assumed that a transmitting slot offset configured for associated by the NZP-CSI-RS-ResourceSet is n. In this case, a transmitting slot for the CSI-RS 0 is a slot n+m×e=n, a transmitting slot for the CSI-RS 1 is a slot n+m×e=n+2, and a transmitting slot for the CSI-RS 2 is a slot n+m×e=n+4.

It should be noted that the second parameter m may be configured in the higher-layer signaling NZP-CSI-RS-ResourceSet, and the third parameter e may be configured in higher-layer signaling NZP-CSI-RS-Resource.

For example, when the network configures K different CSI-RSs for obtaining CSI information, the terminal needs to obtain a transmitting order and transmitting time-domain positions of the K different CSI-RSs. The network indicates the second parameter m to the terminal through the higher-layer signaling NZP-CSI-RS-ResourceSet, and indicates the third parameter e to the terminal through the higher-layer signaling NZP-CSI-RS-Resource. The terminal assumes that a time-domain separation between two CSI-RSs sent by the network is m slots. The terminal obtains the slot offset n+e×m of each CSI-RS, where n is an initial slot offset (which may be an offset indicated by aperiodicTriggeringOffset) that is associated with the K CSI-RSs and that is indicated by the higher-layer signaling. The terminal assumes that the network sequentially sends corresponding CSI-RSs in ascending order of slots of the CSI-RSs. Specially, e=0 indicates that a slot offset of the CSI-RS is n and the CSI-RS is the 1^{st} sent CSI-RS.

In an implementation, the network-side device may alternatively directly configure a transmitting time-domain position of each CSI-RS relative to the 1^{st} sent CSI-RS or a reference time-domain position. Therefore, in this implementation, that the terminal determines the transmitting order of the K CSI-RSs may include the following steps.

Step 1: The terminal obtains a fourth parameter d configured by the network-side device for each CSI-RS, where the fourth parameter d is used for the terminal to obtain a transmitting time-domain position of the CSI-RS.

Step 2: The terminal obtains, based on the fourth parameter d of each CSI-RS, a first time-domain unit offset value corresponding to each CSI-RS.

Step 3: The terminal obtains, based on the first time-domain unit offset value corresponding to each CSI-RS, a transmitting time-domain position associated with each CSI-RS.

Step 4: The terminal determines that the K CSI-RSs are to be sent in ascending order of the first time-domain unit offset values.

In the foregoing implementation, the terminal may obtain the transmitting order of the K CSI-RSs based on the fourth parameter d configured by the network-side device. Specifically, the terminal obtains the first time-domain unit offset for transmission of each CSI-RS based on the fourth parameter d associated with each CSI-RS, and determines the transmitting order according to the ascending order of the offset values, to be specific, sends the K CSI-RSs in ascending order of the first time-domain unit offset values.

In the foregoing possible implementation, the terminal may determine, based on higher-layer signaling, a transmitting time-domain position associated with the 1^{st} sent CSI-RS, to obtain the transmitting time-domain position associated with each CSI-RS based on the fourth parameter d. Optionally, in a manner, the terminal obtains a starting transmitting time-domain position n associated with the K CSI-RSs (to be specific, a transmitting time-domain position corresponding to the 1^{st} CSI-RS is an n^{th} time-domain unit) through higher-layer signaling. In this case, the transmitting time-domain position of each CSI-RS is n+d (to be specific, the transmitting time-domain position of each CSI-RS is an (n+d)^{th} time-domain unit). Optionally, the higher-layer signaling may be NZP-CSI-RS-Resource.

For example, three CSI-RSs are configured in the higher-layer signaling NZP-CSI-RS-ResourceSet: a CSI-RS 0, a CSI-RS 1, and a CSI-RS 2. In addition, the fourth parameter d is configured in the CSI-RS 0, where d=0; the fourth parameter d is configured in the CSI-RS 1, where d=2; and the fourth parameter d is configured in the CSI-RS 2, where d=4. It is assumed that a transmitting slot offset configured for associated by the NZP-CSI-RS-ResourceSet is n. In this case, a transmitting slot for the CSI-RS 0 is a slot n+d=n, a transmitting slot for the CSI-RS 1 is a slot n+d=n+2, and a transmitting slot for the CSI-RS 2 is a slot n+d=n+4.

For example, when the network configures K different CSI-RSs for obtaining CSI information, the terminal needs to obtain a transmitting order and transmitting time-domain positions of the K different CSI-RSs. The network indicates the fourth parameter d to the terminal through the higher-layer signaling NZP-CSI-RS-Resource. The terminal obtains the transmitting order and the time-domain positions of the K CSI-RSs based on the fourth parameter d. The terminal obtains the slot offset n+d of each CSI-RS, where n is an initial slot offset (which may be an offset indicated by aperiodicTriggeringOffset) that is associated with the K CSI-RSs and that is indicated by the higher-layer signaling. The terminal assumes that the network sequentially sends corresponding CSI-RSs in ascending order of slots of the CSI-RSs. Specially, d=0 indicates that a slot offset of the CSI-RS is n and the CSI-RS is the 1^{st} sent CSI-RS. Specially, a value of d may be an integer multiple of the second parameter m, or all values of d are an arithmetic progression.

In an implementation, in a case that the first time-domain unit is a symbol, the terminal determines that no time-domain symbol position is configured in a pattern configuration associated with the K CSI-RSs, or the terminal determines that a part or all of time-domain symbol positions configured in a pattern configuration associated with the K CSI-RSs are invalid. For example, when the terminal assumes that a separation between transmitting time-domain positions associated with two adjacent CSI-RSs is m first time-domain units and the first time-domain unit is a symbol, the terminal assumes that no time-domain symbol position is configured in a pattern (resourceMapping) of the K CSI-RSs, or the terminal ignores a time-domain symbol position configured in a pattern (resourceMapping) of the K CSI-RSs. Alternatively, the terminal assumes that no time-domain symbol position is configured for some CSI-RSs in a pattern (resourceMapping) of the K CSI-RSs, or the terminal ignores time-domain symbol positions configured for some CSI-RSs in a pattern (resourceMapping) of the K CSI-RSs.

In an implementation, the terminal determines that only one CSI-RS in a pattern configuration associated with the K CSI-RSs is associated with or configured with a time-domain position. In this case, the terminal assumes that the CSI-RS is the 1^{st} sent CSI-RS, or the terminal assumes that the time-domain position associated with the CSI-RS is a reference time-domain position for obtaining a time-domain position of another CSI-RS. The time-domain position is not limited to a time-domain symbol position, and may alternatively be a time-domain slot position or the like.

For example, the network configures K same CSI-RSs for obtaining CSI information. In addition, the network indicates the second parameter m through the higher-layer signaling NZP-CSI-RS-ResourceSet, where m indicates that a time-domain separation between two adjacent CSI-RSs sent by the network is m symbols. The terminal determines a slot n of the 1^{st} sent CSI-RS based on a slot offset indicated by the higher-layer signaling. In addition, the terminal obtains, based on a pattern parameter associated with the CSI-RS, a transmitting symbol position k of the CSI-RS. In this case, a time-domain position of the 1^{st} sent CSI-RS is a symbol k in the slot n, a time-domain position of the 2^{nd} sent CSI-RS is a symbol n×N+k+m, a time-domain position of the 3^{rd} sent CSI-RS is a symbol n×N+k+2×m, and so on. N indicates a quantity of symbols included in a slot. Because there are K same CSI-RSs, all sent CSI-RSs have same field information in NZP-CSI-RS-Resource.

In the foregoing implementation, optionally, a time-domain symbol position associated with the 1^{st} sent CSI-RS among the K CSI-RSs may be determined according to a second default rule, and a time-domain symbol position associated with an i^{th} (i>1) sent CSI-RS among the K CSI-RSs is obtained based on a time-domain symbol position associated with a previously sent CSI-RS and m. For example, the time-domain symbol position associated with the i^{th} sent CSI-RS = the time-domain symbol position associated with the previously sent CSI-RS + m.

Optionally, the second default rule may include at least one of the following (1) and (2).
(1) The time-domain symbol position associated with the 1^{st} sent CSI-RS is the 1^{st} time-domain symbol in an associated slot. To be specific, the terminal determines, by default, that the time-domain symbol position associated with the 1^{st} sent CSI-RS is the 1^{st} time-domain symbol in the associated slot.
(2) The time-domain symbol position associated with the 1^{st} sent CSI-RS is a time-domain symbol position configured in a pattern of the CSI-RS. To be specific, the terminal determines, by default, that the time-domain symbol position associated with the 1^{st} sent CSI-RS is the time-domain symbol position configured in the pattern (resourceMapping) of the CSI-RS.

Patterns that are associated with CSI-RSs among the K CSI-RSs and that are configured by the network-side device may not be completely the same, or symbol indexes associated with CSI-RSs are not completely the same. In an implementation, in this case, the terminal determines that a symbol separation between a symbol index associated with any CSI-RS and a first reference symbol index does not exceed a first value. In this implementation, when some or all of the K CSI-RSs configured by the network side are associated with different patterns or some or all of the K CSI-RSs are associated with different symbol indexes (symbol index), a symbol separation between a symbol index associated with any CSI-RS and the first reference symbol does not exceed the first value. Optionally, the symbol index (symbol index) may be a first symbol index (first symbol index) associated with the CSI-RS.

For example, it is assumed that the first reference symbol index is k and the first value is s. In this case, a symbol index associated with any CSI-RS is any value within [k-s, k+s]. It should be noted that [k-s, k+s] represents a range, and indicates that the symbol index is greater than or equal to k-s and less than or equal to k+s.

Optionally, in the foregoing implementation, the symbol index associated with the any CSI-RS is not less than 0 and not greater than N-1, where N is a quantity of symbols in a slot; or the any CSI-RS is sent within a slot or does not exceed a transmitting slot indicated by the network-side device. In this optional implementation, when the symbol index (symbol index) associated with the any CSI-RS is any value within [k-s, k+s], the symbol index associated with the CSI-RS further needs to meet a condition of being not less than 0 and not greater than N-1, where N indicates a quantity of symbols in a slot. Alternatively, the CSI-RS cannot be sent across slots or by exceeding a transmitting slot indicated by the network.

In an implementation, the first value is determined based on a capability fed back by the terminal. To be specific, a symbol separation between a symbol index associated with any CSI-RS and the first reference symbol index does not exceed a corresponding separation fed back by the terminal, to ensure that the terminal can measure all CSI-RSs and perform feedback based on a measurement result. The capability fed back by the terminal may be a symbol separation or a maximum symbol separation supported by the terminal based on actual measurement on a hardware or software condition. The terminal may feed back one or more symbol separations, and the network can select only the first value from the symbol separations. Alternatively, the terminal may feed back different symbol separations for a plurality of CSI-RS parameter configurations, and the network selects an appropriate first value based on a CSI-RS parameter configuration. Alternatively, the terminal may feed back one or more maximum symbol separations, and the network may select any value not greater than the maximum symbol separation as the first value.

In the foregoing implementation, in a case that transmitting symbols configured by the network-side device for the K CSI-RSs do not meet the capability fed back by the terminal, the terminal skips feeding back channel state information or skips updating channel state information. When transmitting symbol indexes configured by the network for the K CSI-RSs do not meet the capability fed back by the terminal, the terminal may not feed back CSI or update CSI information, to avoid inaccuracy of fed-back or updated CSI information. Alternatively, for CSI information fed back by the terminal, corresponding CSI information is obtained only based on one or more CSI-RSs that meet the capability.

In the foregoing implementation, optionally, the terminal determines the first reference symbol index based on a configuration of the network-side device or a third default rule.

For example, the third default rule may include: The first reference symbol index is a symbol index associated with the 1^{st} CSI-RS sent or configured by the network-side device. For example, the first reference symbol index may be the 1^{st} symbol index associated with the 1^{st} CSI-RS sent or configured by the network-side device.

For example, the network configures three CSI-RSs, two adjacent CSI-RSs are spaced by two slots, each slot includes 14 symbols, and an offset fed back by the terminal is s=2. It is assumed that the first reference symbol is the 1^{st} CSI-RS sent by the network, and is a slot n symbol x. In this case, a moment at which the network sends the 2^{nd} CSI-RS may be any symbol among a slot n+2 symbol x-2 to a slot n+2 symbol x+2; and a moment at which the network sends the 3^{rd} CSI-RS may be any symbol among a slot n+4 symbol x-2 to a slot n+4 symbol x+2. Further, it is assumed that a slot includes 14 symbols and x=12. In this case, a moment of the 2^{nd} CSI-RS may be any symbol among a slot n+2 symbol x-2 to a slot n+2 symbol 13; and a moment at which the network sends the 3^{rd} CSI-RS may be any symbol among a slot n+4 symbol x-2 to a slot n+4 symbol 13.

K CSI-RSs and that are configured by the network-side device may not be completely the same, or symbol indexes associated with CSI-RSs are not completely the same. In another implementation, in this case, the terminal determines that a symbol separation between time-domain positions associated with two adjacently sent or configured CSI-RSs is any value within [m×N-y, m×N+y], where m indicates a quantity of slots between time-domain positions associated with two adjacent CSI-RSs, N is a quantity of symbols in a slot, and y is a second value. In this implementation, when some or all of the K CSI-RSs configured by the network side are associated with different patterns or some or all of the K CSI-RSs are associated with different symbol indexes (symbol index), the terminal determines that a symbol separation between two adjacently sent or configured CSI-RSs is any value within [m×N-y, m×N+y]. It should be noted that [m×N-y, m×N+y] represents a range, and indicates that the symbol separation is greater than or equal to m×N-y and less than or equal to m×N+y.

For example, it is assumed that the network configures two CSI-RSs, two adjacent CSI-RSs are spaced by two slots, each slot includes 14 symbols, and an offset fed back by the terminal is y=2. It is assumed that the 1^{st} CSI-RS sent by the network is a slot n symbol x. In this case, a moment at which the network sends the 2^{nd} CSI-RS may be any symbol among a slot n+2 symbol x-2 to a slot n+2 symbol x+2. Further, it is assumed that a slot includes 14 symbols and x=12. In this case, a moment of the 2^{nd} CSI-RS may be any symbol among a slot n+2 symbol x-2 to a slot n+2 symbol 13.

Optionally, in a case that a symbol separation between two adjacently sent or configured CSI-RSs is any value within [m×N-y, m×N+y], a symbol index associated with any CSI-RS is not less than 0 and not greater than N-1, where N is a quantity of symbols in a slot; or the any CSI-RS is sent within a slot or does not exceed a transmitting slot indicated by the network-side device.

It can be understood that, when a symbol index associated with any CSI-RS is any value within [m×N-y, m×N+y], the symbol index associated with the CSI-RS further needs to meet a condition of being not less than 0 and not greater than N-1, where N indicates a quantity of symbols in a slot. Alternatively, the CSI-RS cannot be sent across slots or by exceeding a transmitting slot indicated by the network.

In an implementation, the second value is determined based on a capability fed back by the terminal. To be specific, a value range of a symbol separation between two adjacently sent or configured CSI-RSs is determined based on a symbol separation parameter fed back by the terminal. The symbol separation parameter may be a subsequent value of a symbol separation, or may be a maximum value of a symbol separation, or may be another parameter for determining a value range of a symbol separation between two adjacently sent or configured CSI-RSs.

In an implementation, in a case that a transmitting symbol separation, configured by the network-side device, between two adjacently sent or configured CSI-RSs among the K CSI-RSs is beyond [m×N-y, m×N + y], the terminal skips feeding back channel state information or skips updating channel state information. In this implementation, when a quantity of transmitting symbols, configured by the network-side device, between two adjacent CSI-RSs among the K CSI-RSs does not meet the range [m×N-y, m×N+y], the terminal may not feed back CSI or update CSI information. To be specific, when a transmitting symbol separation between two adjacently sent or configured CSI-RSs among the K CSI-RSs exceeds a capability of the terminal, the terminal does not feed back or update CSI, to avoid feeding back or updating inaccurate CSI information.

In an implementation, to accurately receive CSI-RSs, the terminal may further determine a frequency-domain resource position associated with each of the K CSI-RSs. By determining the frequency-domain resource position associated with each of the K CSI-RSs, the terminal may detect each CSI-RS at the frequency-domain resource position associated with each CSI-RS, to obtain channel state information.

In an implementation, a separation between a frequency-domain resource position associated with any CSI-RS and a first reference frequency-domain resource position does not exceed a third value.

Optionally, the frequency-domain resource position may include a frequency-domain resource index, and the frequency-domain resource index includes one of the following:
a index of a frequency-domain resource block (RB) within a segment of bandwidth;
a number of a subcarrier within a segment of bandwidth;
a index of a frequency-domain resource element (Resource Element, RE) within a segment of bandwidth;
a number of a subcarrier within a frequency-domain resource block;
a index of a frequency-domain resource element (RE) within a frequency-domain resource block;
a index of a frequency-domain resource block (RB) within a frequency-domain resource block group;
a number of a subcarrier within a frequency-domain resource block group; or
a index of a frequency-domain resource element (RE) within a frequency-domain resource block group.

In an implementation, the third value may be determined based on a capability fed back by the terminal, to be specific, a capability fed back by the terminal to the network-side device. In a case that frequency-domain resource positions configured by the network-side device for the K CSI-RSs do not meet the capability fed back by the terminal, the terminal skips feeding back channel state information or skips updating channel state information.

In an implementation, the terminal may determine the first reference frequency-domain resource position based on a configuration of the network-side device or a fourth default rule. For example, the terminal may determine, by default, that a first reference frequency-domain resource index is a frequency-domain resource index associated with the 1^{st} CSI-RS sent or configured by the network-side device. For example, the network-side device may configure, through higher-layer signaling or a MAC-CE, the frequency-domain resource index associated with the 1^{st} CSI-RS.

It should be noted that, although the method for obtaining channel state information and the method for determining a CSI-RS transmitting order provided in the embodiments of this application are respectively described in the method 200 and the method 300, during actual application, the two methods may alternatively be combined with each other. For example, FIG. 4 is a schematic flowchart of another method for obtaining channel state information according to an embodiment of this application. The method 400 may be performed by a terminal. In other words, the method 400 may be performed by software or hardware installed on the terminal. As shown in FIG. 4, the method mainly includes the following steps.

S410: The terminal obtains a first parameter configured by a network-side device for each of K CSI-RSs, where K is an integer greater than 1.

This step is the same as S210 in the method 200. For details, refer to related descriptions in the method 200. Details are not described herein again.

S420: The terminal determines a transmitting order of the K CSI-RSs.

This step may be the same as S320 in the method 300. For details, refer to related descriptions in the method 300. Details are not described herein again.

S430: In a case that first parameters of the K CSI-RSs are not completely the same, the terminal determines a first reference CSI-RS from the K CSI-RSs according to a preset rule or an indication of network higher-layer signaling.

This step is the same as S220 in the method 200. For details, refer to related descriptions in the method 200. Details are not described herein again.

During actual application, S420 and S430 are performed without a strict order.

S440: The terminal obtains channel state information based on a power parameter associated with the first reference CSI-RS, where the power parameter is used for obtaining power information needed for calculating the channel state information.

This step is the same as S320 in the method 200. For details, refer to related descriptions in the method 200. Details are not described herein again.

Optionally, the terminal may measure each CSI-RS based on the transmitting order of the K CSI-RSs, and obtain the channel state information based on the power parameter associated with the first reference CSI-RS and a measurement result.

According to the foregoing method provided in this embodiment of this application, the terminal may determine the transmitting order of the K CSI-RSs based on configuration information of the network-side device and/or a default rule, to ensure consistent understanding of the terminal and the network-side device. In addition, when the first parameters of the K CSI-RSs are not completely the same, the terminal determines the first reference CSI-RS from the K CSI-RSs according to the preset rule or the indication of the network higher-layer signaling, and then obtains the channel state information based on the determined first reference CSI-RS. CSI information can be obtained based on the first reference CSI-RS in a case that a plurality of CSI-RSs are associated with a plurality of fields, a plurality of parameters, or a plurality of pieces of higher-layer signaling, and only some parameters may be the same. In this way, the terminal can accurately receive the CSI-RSs, and further obtain correct CSI information.

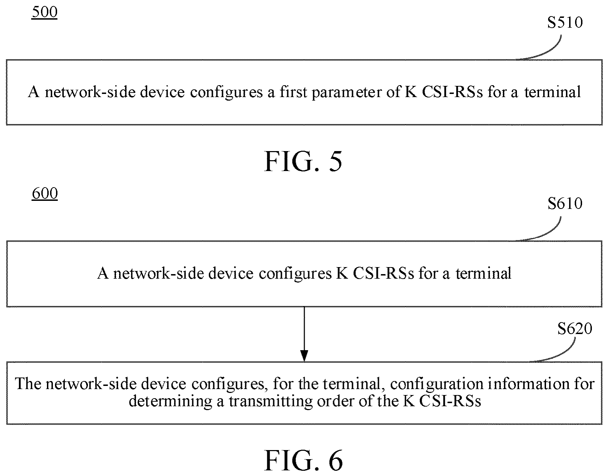

Corresponding to the method 200, FIG. 5 shows a CSI-RS configuration method further provided in an embodiment of this application. The method 500 may be performed by a network-side device. In other words, the method 500 may be performed by software or hardware installed on the network-side device. The method includes the following steps.

S510: The network-side device configures a first parameter of each of K CSI-RSs for a terminal, where K is an integer greater than 1.

In a case that first parameters of the K CSI-RSs are not completely the same, the terminal is indicated to determine a first reference CSI-RS from the K CSI-RSs according to a preset rule or an indication of network higher-layer signaling, and then obtain channel state information based on a power parameter associated with the first reference CSI-RS, where the power parameter is used for obtaining power information needed for calculating the channel state information.

In this embodiment of this application, the network-side device configures the first parameters of the K channel state information reference signals CSI-RSs for the terminal, to help the terminal accurately obtain CSI information in a case that the obtained first parameters of the K CSI-RSs are not completely the same.

Based on the foregoing embodiment, further, the first parameter includes at least one of the following:
a first identifier, used for indicating an identifier of a CSI-RS;
a pattern configuration, used for indicating at least one of the following: a symbol position occupied by a CSI-RS in a slot, a subcarrier position occupied by a CSI-RS in a physical resource block PRB, or a frequency-domain position of a CSI-RS in a carrier or a bandwidth part BWP;
a power parameter, used for indicating power information associated with a CSI-RS; or
a second identifier, used for indicating a scrambling identifier associated with a CSI-RS.

It should be noted that, for specific content of the first parameter, reference may be made to related content in the method embodiment shown in FIG. 3. Details are not described herein again.

In an optional implementation, to enable the network-side device and the terminal to understand a transmitting order of the K CSI-RSs consistently, the method may further include: The network-side device configures, for the terminal, configuration information for determining the transmitting order of the K CSI-RSs.

Further, that the network-side device configures, for the terminal, configuration information for determining the transmitting order of the K CSI-RSs includes at least one of the following:
(1) The network-side device configures or associates a second parameter m for the K CSI-RSs through first higher-layer signaling, where the second parameter m is used for indicating that a separation between transmitting time-domain positions associated with two adjacent CSI-RSs is m first time-domain units.
   It can be understood that the network-side device configures the second parameter m for the terminal through the first higher-layer signaling, to indicate the terminal to determine, based on the second parameter m, that a time-domain separation between two adjacent CSI-RSs sent by the network-side device is m slots.
(2) The network-side device configures or associates a second parameter m for the K CSI-RSs and configures or associates a third parameter e for each CSI-RS through second higher-layer signaling, where the third parameter e is used for indicating that a separation between a transmitting time-domain position associated with a CSI-RS and a target time-domain position is m×e first time-domain units, and the target time-domain position includes one of the following: a transmitting time-domain position associated with the 1^{st} sent CSI-RS, or a reference time-domain position.
   It can be understood that the network-side device configures the second parameter m and the third parameter e for the terminal through the second higher-layer signaling, to indicate the terminal to determine, based on the second parameter m, that a time-domain separation between two adjacent CSI-RSs sent by the network-side device is m slots, and indicate the terminal to obtain a slot offset n+e×m of each CSI-RS based on the third parameter e, where n is an initial slot offset (which may be an offset indicated by aperiodicTriggeringOffset) that is associated with the K CSI-RSs and that is indicated by the higher-layer signaling.
   For example, when the network-side device sequentially sends corresponding CSI-RSs in ascending order of slots of the CSI-RSs, e=0 indicates that a slot offset of the CSI-RS is n and the CSI-RS is the 1^{st} sent CSI-RS.
(3) The network-side device configures a fourth parameter d for each CSI-RS through third higher-layer signaling, where the fourth parameter d is used for the terminal to obtain a transmitting time-domain position of the CSI-RS.

It can be understood that the network-side device configures the fourth parameter d for the terminal through the third higher-layer signaling, to indicate the terminal to obtain the transmitting order and time-domain positions of the K CSI-RSs based on the fourth parameter d. The terminal obtains a slot offset n+d of each CSI-RS, where n is an initial slot offset (which may be an offset indicated by aperiodicTriggeringOffset) that is associated with the K CSI-RSs and that is indicated by the higher-layer signaling.

For example, when the network-side device sequentially sends corresponding CSI-RSs in ascending order of slots of the CSI-RSs, d=0 indicates that a slot offset of the CSI-RS is n and the CSI-RS is the 1^{st} sent CSI-RS. It should be noted that a value of d may be an integer multiple of the second parameter m, or all values of d are an arithmetic progression.

Corresponding to the method 300, FIG. 6 shows a method for indicating a CSI-RS transmitting order according to an embodiment of this application. The method 600 may be performed by a network-side device. In other words, the method 600 may be performed by software or hardware installed on the network-side device. The method includes the following steps.

S610: The network-side device configures K CSI-RSs for a terminal, where K is an integer greater than 1. For example, the network-side device configures the K CSI-RSs and configuration parameters of the CSI-RSs for the terminal through higher-layer signaling.

S620: The network-side device configures, for the terminal, configuration information for determining a transmitting order of the K CSI-RSs.

In an implementation, that the network-side device configures, for the terminal, configuration information for determining a transmitting order of the K CSI-RSs includes at least one of the following:
(1) The network-side device configures or associates a second parameter m for the K CSI-RSs through first higher-layer signaling, where the second parameter m is used for indicating that a separation between transmitting time-domain positions associated with two adjacent CSI-RSs is m first time-domain units.
(2) The network-side device configures or associates a second parameter m for the K CSI-RSs and configure or associates a third parameter e for each CSI-RS through second higher-layer signaling, where the third parameter e is used for indicating that a separation between a transmitting time-domain position associated with a CSI-RS and a target time-domain position is m×e first time-domain units, and the target time-domain position includes one of the following: a transmitting time-domain position associated with the 1^{st} sent CSI-RS, or a reference time-domain position.
(3) The network-side device configures a fourth parameter d for each CSI-RS through third higher-layer signaling, where the fourth parameter d is used for the terminal to obtain a transmitting time-domain position of the CSI-RS.

In this embodiment of this application, the network-side device configures the K channel state information reference signals CSI-RSs for the terminal, to help the terminal accurately obtain the configuration information of the transmitting order of the K CSI-RSs.

An apparatus for obtaining channel state information and an apparatus for determining a CSI-RS transmitting order in the embodiment of this application may be electronic devices, for example, electronic devices with an operating system; or may be components, for example, integrated circuits or chips, in electronic devices. The electronic device may be a terminal or another device other than the terminal. For example, the terminal may include but is not limited to the aforementioned types of the terminal 11, and the another device may be a server, a network attached storage (Network Attached Storage, NAS), or the like. This is not specifically limited in the embodiments of this application.

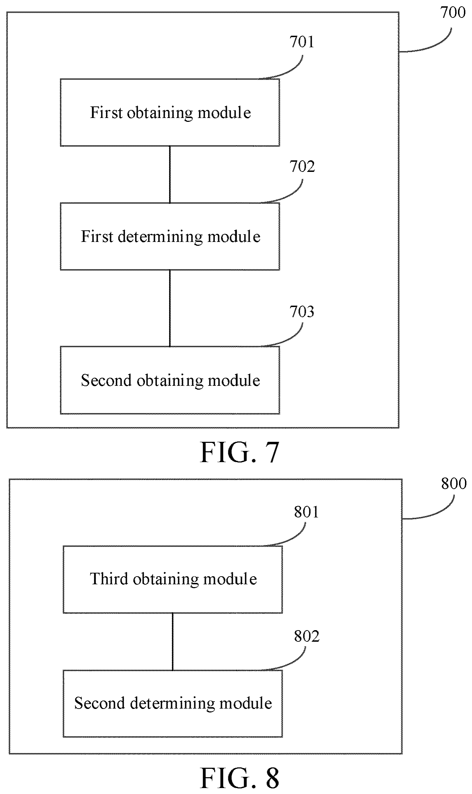

FIG. 7 is a diagram of a structure of an apparatus for obtaining channel state information according to an embodiment of this application. As shown in FIG. 7, the apparatus 700 mainly includes a first obtaining module 701, a first determining module 702, and a second obtaining module 703.

In this embodiment of this application, the first obtaining module 701 is configured to obtain a first parameter configured by a network-side device for each of K CSI-RSs, where K is an integer greater than 1. The first determining module 702 is configured to: in a case that first parameters of the K CSI-RSs are not completely the same, determine a first reference CSI-RS from the K CSI-RSs according to a preset rule or an indication of network higher-layer signaling. The second obtaining module 703 is configured to obtain channel state information based on a power parameter associated with the first reference CSI-RS, where the power parameter is used for obtaining power information needed for calculating the channel state information.

In an optional implementation, the preset rule includes at least one of the following:
a CSI-RS with a largest CSI-RS identifier among the K CSI-RSs is the first reference CSI-RS;
a CSI-RS with a smallest CSI-RS identifier among the K CSI-RSs is the first reference CSI-RS;
the 1^{st} configured CSI-RS in first configuration signaling is the first reference CSI-RS, where the first configuration signaling is used for configuring the K CSI-RSs; or
the last configured CSI-RS in first configuration signaling is the first reference CSI-RS, where the first configuration signaling is used for configuring the K CSI-RSs.

In an optional implementation, the second obtaining module 703 is further configured to: in a case that first parameters of the K CSI-RSs are completely the same, obtain channel state information based on a power parameter associated with any one of the K CSI-RSs.

In an optional implementation, the first parameter includes at least one of the following:
a first identifier, used for indicating an identifier of a CSI-RS;
a pattern configuration, used for indicating at least one of the following: a symbol position occupied by a CSI-RS in a slot, a subcarrier position occupied by a CSI-RS in a physical resource block PRB, or a frequency-domain position of a CSI-RS in a carrier or a bandwidth part BWP;
a power parameter, used for indicating power information associated with a CSI-RS; or
a second identifier, used for indicating a scrambling identifier associated with a CSI-RS.

In an optional implementation, the first determining module 702 is further configured to determine a transmitting order of the K CSI-RSs.

In an optional implementation, the determining a transmitting order of the K CSI-RSs includes:
obtaining a second parameter m that is configured or associated by the network-side device through first higher-layer signaling; and
determining the transmitting order of the K CSI-RSs based on the second parameter m and a first default rule, where a separation between transmitting time-domain positions associated with two adjacent CSI-RSs is m first time-domain units.

In an optional implementation, the first default rule includes at least one of the following:
The K CSI-RSs are sequentially sent in descending order of CSI-RS identifiers of the CSI-RSs;
the K CSI-RSs are sequentially sent in ascending order of CSI-RS identifiers of the CSI-RSs;
the K CSI-RSs are sequentially sent from the earliest to the latest according to a configuration order of the CSI-RSs; or
the K CSI-RSs are sequentially sent from the latest to the earliest according to a configuration order of the CSI-RSs.

In an optional implementation, the determining a transmitting order of the K CSI-RSs includes:
obtaining a second parameter m configured for or associated with the K CSI-RSs and a third parameter e configured for or associated with each CSI-RS, where the second parameter m and the third parameter e are used for indicating that a separation between a transmitting time-domain position associated with a CSI-RS and a target time-domain position is m×e first time-domain units, and the target time-domain position includes one of the following: a transmitting time-domain position associated with the 1^{st} sent CSI-RS, or a reference time-domain position;
obtaining, based on the second parameter m and the third parameter e that are associated with each CSI-RS, a first time-domain unit offset value corresponding to each CSI-RS;
obtaining, based on the first time-domain unit offset value corresponding to each CSI-RS, a transmitting time-domain position associated with each CSI-RS; and
determining that the K CSI-RSs are to be sent in ascending order of the first time-domain unit offset values.

In an optional implementation, the determining a transmitting order of the K CSI-RSs includes:
obtaining a fourth parameter d configured by the network-side device for each CSI-RS, where the fourth parameter d is used for the terminal to obtain a transmitting time-domain position of the CSI-RS;
obtaining, based on the fourth parameter d of each CSI-RS, a first time-domain unit offset value corresponding to each CSI-RS;
obtaining, based on the first time-domain unit offset value corresponding to each CSI-RS, a transmitting time-domain position associated with each CSI-RS; and
determining that the K CSI-RSs are to be sent in ascending order of the first time-domain unit offset values.

In an optional implementation, in a case that the first time-domain unit is a symbol, the first determining module 702 determines that no time-domain symbol position is configured in a pattern configuration associated with the K CSI-RSs, or the terminal determines that a part or all of time-domain symbol positions configured in a pattern configuration associated with the K CSI-RSs are invalid.

In an optional implementation, a time-domain symbol position associated with the 1^{st} sent CSI-RS among the K CSI-RSs is determined according to a second default rule.

In an optional implementation, the second default rule includes at least one of the following:

The time-domain symbol position associated with the 1^{st} sent CSI-RS is the 1^{st} time-domain symbol in an associated slot; or
the time-domain symbol position associated with the 1^{st} sent CSI-RS is a time-domain symbol position configured in a pattern of the CSI-RS.

In an optional implementation, the second determining module 702 is further configured to: in a case that the network-side device configures patterns associated with CSI-RSs among the K CSI-RSs to be not completely the same or symbol indexes associated with CSI-RSs to be not completely the same, determine that a symbol separation between a symbol index associated with any CSI-RS and a first reference symbol index does not exceed a first value.

In an optional implementation, the symbol index associated with the any CSI-RS is not less than 0 and not greater than N-1, where N is a quantity of symbols in a slot; or the any CSI-RS is sent within a slot or does not exceed a transmitting slot indicated by the network-side device.

In an optional implementation, the first value is determined based on a capability fed back by the terminal.

In an optional implementation, the second obtaining module 703 is further configured to: in a case that transmitting symbols configured by the network-side device for the K CSI-RSs do not meet the capability fed back by the terminal, skip feeding back channel state information or skip updating channel state information.

In an optional implementation, the first reference symbol index is determined based on a configuration of the network-side device or a third default rule.

In an optional implementation, the third default rule includes: The first reference symbol index is a symbol index associated with the 1^{st} CSI-RS sent or configured by the network-side device.

In an optional implementation, the second determining module 702 is further configured to: in a case that the network-side device configures patterns associated with CSI-RSs among the K CSI-RSs to be not completely the same or symbol indexes associated with CSI-RSs to be not completely the same, determine that a symbol separation between time-domain positions associated with two adjacently sent or configured CSI-RSs is any value within [m×N-y, m×N+y], where m indicates a quantity of slots between time-domain positions associated with two adjacent CSI-RSs, N is a quantity of symbols in a slot, and y is a second value.

In an optional implementation, a symbol index associated with any CSI-RS is not less than 0 and not greater than N-1, where N is a quantity of symbols in a slot; or the any CSI-RS is sent within a slot or does not exceed a transmitting slot indicated by the network-side device.

In an optional implementation, the second value is determined based on a capability fed back by the terminal.

In an optional implementation, the second obtaining module 703 is further configured to: in a case that a transmitting symbol separation, configured by the network-side device, between two adjacently sent or configured CSI-RSs among the K CSI-RSs is beyond [m×N-y, m×N + y], skip feeding back channel state information or skip updating channel state information.

In an optional implementation, the second determining module 702 is further configured to determine a frequency-domain resource position associated with each of the K CSI-RSs.

In an optional implementation, a separation between a frequency-domain resource position associated with any CSI-RS and a first reference frequency-domain resource position does not exceed a third value.

In an optional implementation, the second obtaining module 703 is further configured to: in a case that frequency-domain resource positions configured by the network-side device for the K CSI-RSs do not meet a capability fed back by the terminal, skip feeding back channel state information or skip updating channel state information.

**In** an optional implementation, the first reference frequency-domain resource position is determined based on a configuration of the network-side device or a fourth default rule.

**In** an optional implementation, the fourth default rule includes: A first reference frequency-domain resource index is a frequency-domain resource index associated with the 1^{st} CSI-RS sent or configured by the network-side device.

FIG. 8 is a diagram of a structure of an apparatus for determining a CSI-RS transmitting order according to an embodiment of this application. As shown in FIG. 8, the apparatus 800 mainly includes a third obtaining module 801 and a second determining module 802.

**In** this embodiment of this application, the third obtaining module 801 is configured to obtain a configuration parameter configured by a network-side device for each of K CSI-RSs, where K is an integer greater than 1. The second determining module 802 is configured to determine a transmitting order of the K CSI-RSs based on first information, where the first information includes at least one of the following: configuration information of the network-side device or a default rule.

**In** an optional implementation, the determining a transmitting order of the K CSI-RSs based on first information includes:
obtaining a second parameter m that is configured or associated by the network-side device through first higher-layer signaling; and
obtaining the transmitting order of the K CSI-RSs based on the second parameter m and a first default rule, where a separation between transmitting time-domain positions associated with two adjacent CSI-RSs is m first time-domain units.

In an optional implementation, the first default rule includes at least one of the following:
The K CSI-RSs are sequentially sent in descending order of CSI-RS identifiers of the CSI-RSs;
the K CSI-RSs are sequentially sent in ascending order of CSI-RS identifiers of the CSI-RSs;
the K CSI-RSs are sequentially sent from the earliest to the latest according to a configuration order of the CSI-RSs; or
the K CSI-RSs are sequentially sent from the latest to the earliest according to a configuration order of the CSI-RSs.

In an optional implementation, the determining a transmitting order of the K CSI-RSs based on first information includes:
obtaining a second parameter m configured for or associated with the K CSI-RSs and a third parameter e configured for or associated with each CSI-RS, where the second parameter m and the third parameter e are used for indicating that a separation between a transmitting time-domain position associated with a CSI-RS and a target time-domain position is m×e first time-domain units, and the target time-domain position includes one of the following: a transmitting time-domain position associated with the 1^{st} sent CSI-RS, or a reference time-domain position;
obtaining, based on the second parameter m and the third parameter e that are associated with each CSI-RS, a first time-domain unit offset value corresponding to each CSI-RS;
obtaining, based on the first time-domain unit offset value corresponding to each CSI-RS, a transmitting time-domain position associated with each CSI-RS; and
determining that the K CSI-RSs are to be sent in ascending order of the first time-domain unit offset values.

In an optional implementation, the determining a transmitting order of the K CSI-RSs based on first information includes:
obtaining a fourth parameter d configured by the network-side device for each CSI-RS, where the fourth parameter d is used for the terminal to obtain a transmitting time-domain position of the CSI-RS;
obtaining, based on the fourth parameter d of each CSI-RS, a first time-domain unit offset value corresponding to each CSI-RS;
obtaining, based on the first time-domain unit offset value corresponding to each CSI-RS, a transmitting time-domain position associated with each CSI-RS; and
determining that the K CSI-RSs are to be sent in ascending order of the first time-domain unit offset values.

In an optional implementation, the second determining module 802 is further configured to: in a case that the first time-domain unit is a symbol, determine that no time-domain symbol position is configured in a pattern configuration associated with the K CSI-RSs, or determine that a part or all of time-domain symbol positions configured in a pattern configuration associated with the K CSI-RSs are invalid.

In an optional implementation, a time-domain symbol position associated with the 1^{st} sent CSI-RS among the K CSI-RSs is determined according to a second default rule.

In an optional implementation, the second default rule includes at least one of the following:
The time-domain symbol position associated with the 1^{st} sent CSI-RS is the 1^{st} time-domain symbol in an associated slot; or
the time-domain symbol position associated with the 1^{st} sent CSI-RS is a time-domain symbol position configured in a pattern of the CSI-RS.

In an optional implementation, the second determining module 802 is further configured to: in a case that the network-side device configures patterns associated with CSI-RSs among the K CSI-RSs to be not completely the same or symbol indexes associated with CSI-RSs to be not completely the same, determine that a symbol separation between a symbol index associated with any CSI-RS and a first reference symbol index does not exceed a first value.

In an optional implementation, the symbol index associated with the any CSI-RS is not less than 0 and not greater than N-1, where N is a quantity of symbols in a slot; or the any CSI-RS is sent within a slot or does not exceed a transmitting slot indicated by the network-side device.

In an optional implementation, the first value is determined based on a capability fed back by the terminal.

In an optional implementation, the apparatus further includes: an execution module, configured to: in a case that transmitting symbols configured by the network-side device for the K CSI-RSs do not meet the capability fed back by the terminal, skip feeding back channel state information or skip updating channel state information.

In an optional implementation, the first reference symbol index is determined by the terminal based on a configuration of the network-side device or a third default rule.

In an optional implementation, the third default rule includes: The first reference symbol index is a symbol index associated with the 1^{st} CSI-RS sent or configured by the network-side device.

In an optional implementation, the second determining module 802 is further configured to: in a case that the network-side device configures patterns associated with CSI-RSs among the K CSI-RSs to be not completely the same or symbol indexes associated with CSI-RSs to be not completely the same, determine that a symbol separation between time-domain positions associated with two adjacently sent or configured CSI-RSs is any value within [m×N-y, m×N+y], where m indicates a quantity of slots between time-domain positions associated with two adjacent CSI-RSs, N is a quantity of symbols in a slot, and y is a second value.

In an optional implementation, a symbol index associated with any CSI-RS is not less than 0 and not greater than N-1, where N is a quantity of symbols in a slot; or the any CSI-RS is sent within a slot or does not exceed a transmitting slot indicated by the network-side device.

In an optional implementation, the second value is determined based on a capability fed back by the terminal.

In an optional implementation, the apparatus further includes: an execution module, configured to: in a case that a transmitting symbol separation, configured by the network-side device, between two adjacently sent or configured CSI-RSs among the K CSI-RSs is beyond [m×N-y, m×N + y], skip feeding back channel state information or skip updating channel state information.

In an optional implementation, the second determining module 802 is further configured to determine a frequency-domain resource position associated with each of the K CSI-RSs.

In an optional implementation, a separation between a frequency-domain resource position associated with any CSI-RS and a first reference frequency-domain resource position does not exceed a third value.

In an optional implementation, the apparatus further includes: an execution module, configured to: in a case that frequency-domain resource positions configured by the network-side device for the K CSI-RSs do not meet a capability fed back by the terminal, skip feeding back channel state information or skip updating channel state information.

In an optional implementation, the first reference frequency-domain resource position is determined based on a configuration of the network-side device or a fourth default rule.

In an optional implementation, the fourth default rule includes: A first reference frequency-domain resource index is a frequency-domain resource index associated with the 1^{st} CSI-RS sent or configured by the network-side device.

FIG. 9 is a diagram of a structure of a CSI-RS configuration apparatus according to an embodiment of this application. As shown in FIG. 9, the apparatus 900 mainly includes a fourth obtaining module 901 and a first configuration module 902.

In this embodiment of this application, the fourth obtaining module 901 is configured to obtain a first parameter of each of K CSI-RSs, where K is an integer greater than 1. The first configuration module 902 is configured to configure the first parameter of each of the K CSI-RSs for a terminal, where in a case that first parameters of the K CSI-RSs are not completely the same, the terminal is indicated to determine a first reference CSI-RS from the K CSI-RSs according to a preset rule or an indication of network higher-layer signaling, and then obtain channel state information based on a power parameter associated with the first reference CSI-RS, where the power parameter is used for obtaining power information needed for calculating the channel state information.

In an optional implementation, the first parameter includes at least one of the following:
a first identifier, used for indicating an identifier of a CSI-RS;
a pattern configuration, used for indicating at least one of the following: a symbol position occupied by a CSI-RS in a slot, a subcarrier position occupied by a CSI-RS in a physical resource block PRB, or a frequency-domain position of a CSI-RS in a carrier or a bandwidth part BWP;
a power parameter, used for indicating power information associated with a CSI-RS; or
a second identifier, used for indicating a scrambling identifier associated with a CSI-RS.

In an optional implementation, the first configuration module 902 is further configured to configure, for the terminal, configuration information for determining a transmitting order of the K CSI-RSs.

In an optional implementation, the configuring, for the terminal, configuration information for determining a transmitting order of the K CSI-RSs includes one of the following:
configuring or associating a second parameter m for the K CSI-RSs through first higher-layer signaling, where the second parameter m is used for indicating that a separation between transmitting time-domain positions associated with two adjacent CSI-RSs is m first time-domain units;
configuring or associating a second parameter m for the K CSI-RSs and configuring or associating a third parameter e for each CSI-RS through second higher-layer signaling, where the third parameter e is used for indicating that a separation between a transmitting time-domain position associated with a CSI-RS and a target time-domain position is m×e first time-domain units, and the target time-domain position includes one of the following: a transmitting time-domain position associated with the 1^{st} sent CSI-RS, or a reference time-domain position; or
configuring a fourth parameter d for each CSI-RS through third higher-layer signaling, where the fourth parameter d is used for the terminal to obtain a transmitting time-domain position of the CSI-RS.

FIG. 10 is a diagram of a structure of an apparatus for indicating a CSI-RS transmitting order according to an embodiment of this application. As shown in FIG. 10, the apparatus 1000 mainly includes a second configuration module 1001 and a third configuration module 1002.

In this embodiment of this application, the second configuration module 1001 is configured to configure K channel state information reference signals CSI-RSs for a terminal, where K is an integer greater than 1. The third configuration module 1002 is configured to configure, for the terminal, configuration information for determining a transmitting order of the K CSI-RSs.

In an optional implementation, the configuring, for the terminal, configuration information for determining a transmitting order of the K CSI-RSs includes one of the following:
configuring or associating a second parameter m for the K CSI-RSs through first higher-layer signaling, where the second parameter m is used for indicating that a separation between transmitting time-domain positions associated with two adjacent CSI-RSs is m first time-domain units;
configuring or associating a second parameter m for the K CSI-RSs and configuring or associating a third parameter e for each CSI-RS through second higher-layer signaling, where the third parameter e is used for indicating that a separation between a transmitting time-domain position associated with a CSI-RS and a target time-domain position is m×e first time-domain units, and the target time-domain position includes one of the following: a transmitting time-domain position associated with the 1^{st} sent CSI-RS, or a reference time-domain position; or
configuring a fourth parameter d for each CSI-RS through third higher-layer signaling, where the fourth parameter d is used for the terminal to obtain a transmitting time-domain position of the CSI-RS.

The foregoing apparatuses provided in the embodiments of this application are capable of implementing the processes implemented in the method embodiments of FIG. 2 to FIG. 6, with the same technical effects achieved. To avoid repetition, details are not described herein again.

Optionally, as shown in FIG. 11, an embodiment of this application further provides a communication device 1100, including a processor 1101 and a memory 1102. The memory 1102 stores a program or instructions capable of running on the processor 1101. For example, in a case that the communication device 1100 is a terminal, when the program or the instructions are executed by the processor 1101, the steps in the method embodiments of FIG. 2 to FIG. 4 are implemented, with the same technical effects achieved. In a case that the communication device 1100 is a network-side device, when the program or the instructions are executed by the processor 1101, the steps in the method embodiments of FIG. 5 and FIG. 6 are implemented, with the same technical effects achieved. To avoid repetition, details are not described herein again.

An embodiment of this application further provides a terminal, including a processor and a communication interface. The communication interface communicates with an external device. The processor implements the following method 200, 300, or 400. The terminal embodiment corresponds to the foregoing terminal-side method embodiments, and all implementation processes and implementations of the foregoing method embodiments are applicable to the terminal embodiment, with the same technical effects achieved. Specifically, FIG. 12 is a diagram of a hardware structure of a terminal for implementing the embodiments of this application.

The terminal 1200 includes but is not limited to at least some of the following components: a radio frequency unit 1201, a network module 1202, an audio output unit 1203, an input unit 1204, a sensor 1205, a display unit 1206, a user input unit 1207, an interface unit 1208, a memory 1209, a processor 1210, and the like.

Persons skilled in the art can understand that the terminal 1200 may further include a power supply (for example, a battery) that supplies power to each component. The power supply may be logically connected to the processor 1210 through a power management system, so that functions such as charging management, discharging management, and power consumption management are implemented through the power management system. The terminal structure shown in FIG. 12 does not constitute a limitation on the terminal. The terminal may include more or fewer components than those shown in the figure, or some components may be combined, or different component arrangements may be used. Details are not described herein again.

It should be understood that, in this embodiment of this application, the input unit 1204 may include a graphics processing unit (Graphics Processing Unit, GPU) 12041 and a microphone 12042. The graphics processing unit 12041 processes image data of a static picture or a video that is obtained by an image capture apparatus (for example, a camera) in a video capture mode or an image capture mode. The display unit 1206 may include a display panel 12061. The display panel 12061 may be configured in a form of a liquid crystal display, an organic light-emitting diode, or the like. The user input unit 1207 includes at least one of a touch panel 12071 and other input devices 12072. The touch panel 12071 is also referred to as a touchscreen. The touch panel 12071 may include two parts: a touch detection apparatus and a touch controller. The other input devices 12072 may include but are not limited to a physical keyboard, a function button (such as a volume control button or an on/off button), a trackball, a mouse, and a joystick. Details are not described herein.

In this embodiment of this application, after receiving downlink data from a network-side device, the radio frequency unit 1201 may transmit the downlink data to the processor 1210 for processing. In addition, the radio frequency unit 1201 may transmit uplink data to the network-side device. Usually, the radio frequency unit 1201 includes but is not limited to an antenna, an amplifier, a transceiver, a coupler, a low noise amplifier, a duplexer, and the like.

The memory 1209 may be configured to store software programs or instructions and various data. The memory 1209 may mainly include a first storage area for storing a program or instructions and a second storage area for storing data. The first storage area may store an operating system, an application or instructions required by at least one function (for example, an audio play function or an image play function), and the like. In addition, the memory 1209 may include a volatile memory or a non-volatile memory, or the memory 1209 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), or a direct rambus random access memory (Direct Rambus RAM, DRRAM). The memory 1209 in this embodiment of this application includes but is not limited to these and any other suitable types of memories.

The processor 1210 may include one or more processing units. Optionally, the processor 1210 integrates an application processor and a modem processor. The application processor mainly processes operations related to an operating system, a user interface, an application, and the like. The modem processor mainly processes wireless communication signals, for example, is a baseband processor. It can be understood that the modem processor may alternatively not be integrated in the processor 1210.

The processor 1210 is configured to: obtain a first parameter configured by a network-side device for K channel state information reference signals CSI-RSs, where K is an integer greater than 1; in a case that first parameters of the K CSI-RSs are not completely the same, determine a first reference CSI-RS from the K CSI-RSs according to a preset rule or an indication of network higher-layer signaling; and obtain channel state information based on a power parameter associated with the first reference CSI-RS, where the power parameter is used for obtaining power information needed for calculating the channel state information.

In this embodiment of this application, the terminal obtains the first parameter configured by the network-side device for each of K CSI-RSs, and when the first parameters of the K CSI-RSs are not completely the same, the terminal determines the first reference CSI-RS from the K CSI-RSs according to the preset rule or the indication of the network higher-layer signaling, and then obtains the channel state information based on the determined first reference CSI-RS. This can resolve a problem that the terminal cannot accurately obtain CSI information because some parameters of the K CSI-RSs obtained by the terminal are not completely the same and the terminal cannot determine the first reference CSI-RS.

Alternatively, the processor 1210 is configured to: obtain a configuration parameter configured by a network-side device for K CSI-RSs, where K is an integer greater than 1; and determine a transmitting order of the K CSI-RSs based on first information, where the first information includes at least one of the following: configuration information of the network-side device or a default rule.

The terminal 1200 provided in this embodiment of this application may further implement the processes in the method embodiments shown in FIG. 2 to FIG. 4, with the same technical effects achieved. To avoid repetition, details are not described herein again.

An embodiment of this application further provides a network-side device, including a processor and a communication interface. The processor is configured to implement the foregoing method 500 or 600. The communication interface is configured to communicate with an external device. The network-side device embodiment corresponds to the foregoing method embodiments for the network-side device, and all implementation processes and implementations of the foregoing method embodiments are applicable to the network-side device embodiment, with the same technical effects achieved.

Specifically, an embodiment of this application further provides a network-side device. As shown in FIG. 13, the network-side device 1300 includes an antenna 1301, a radio frequency apparatus 1302, a baseband apparatus 1303, a processor 1304, and a memory 1305. The antenna 1301 is connected to the radio frequency apparatus 1302. In an uplink direction, the radio frequency apparatus 1302 receives information through the antenna 1301, and sends the received information to the baseband apparatus 1303 for processing. In a downlink direction, the baseband apparatus 1303 processes to-be-sent information, and sends the information to the radio frequency apparatus 1302; and the radio frequency apparatus 1302 processes the received information and then sends the information through the antenna 1301.

The methods performed by the network-side device in the foregoing embodiments may be implemented in the baseband apparatus 1303, and the baseband apparatus 1303 includes a baseband processor.

The baseband apparatus 1303 may include, for example, at least one baseband board, where a plurality of chips are disposed on the baseband board. As shown in FIG. 13, one of the chips is, for example, the baseband processor, which is connected to the memory 1305 through a bus interface, to invoke a program in the memory 1305 to perform the operations of the network device shown in the foregoing method embodiments.

The network-side device may further include a network interface 1306. The interface is, for example, a common public radio interface (common public radio interface, CPRI).

Specifically, the network-side device 1300 in this embodiment of this application further includes instructions or a program stored in the memory 1305 and capable of running on the processor 1304, and the processor 1304 invokes the instructions or program in the memory 1305 to perform the method performed by the modules shown in FIG. 9 or FIG. 10, with the same technical effects achieved. To avoid repetition, details are not described herein again.

An embodiment of this application further provides a readable storage medium. The readable storage medium stores a program or instructions. When the program or the instructions are executed by a processor, the processes of the method embodiments of FIG. 2 to FIG. 6 are implemented, with the same technical effects achieved. To avoid repetition, details are not described herein again.

An embodiment of this application further provides a chip. The chip includes a processor and a communication interface. The communication interface is coupled to the processor. The processor is configured to run a program or instructions, to implement the processes of the method embodiments shown in FIG. 2 to FIG. 6, with the same technical effects achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program/program product. The computer program/program product is stored in a storage medium. The computer program/program product is executed by at least one processor to implement the processes in the method embodiments of FIG. 2 to FIG. 6, with the same technical effects achieved. To avoid repetition, details are not described herein again.

An embodiment of this application further provides a system for obtaining CSI information. The system includes a terminal and a network-side device. The terminal is configured to perform the processes in the method embodiment shown in FIG. 2, and the network-side device is configured to perform the processes in the method embodiment shown in FIG. 5; or the terminal is configured to perform the processes in the method embodiment shown in FIG. 3, and the network-side device is configured to perform the processes in the method embodiment shown in FIG. 6, with the same technical effects achieved. To avoid repetition, details are not described herein again.

It should be noted that the terms "include", "comprise", or any of their variants in this specification are intended to cover a non-exclusive inclusion, so that a process, a method, an object, or an apparatus that includes a list of elements not only includes those elements but also includes other elements that are not expressly listed, or further includes elements inherent to such a process, method, object, or apparatus. Without more restrictions, an element defined by the statement "including a..." does not preclude existence of other identical elements in a process, method, object, or apparatus that includes the element. In addition, it should be noted that the scope of the methods and apparatuses in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing descriptions of the implementations, persons skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the conventional technology may be implemented in a form of a computer software product. The computer software product is stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in the embodiments of this application.

The foregoing describes the embodiments of this application with reference to the accompanying drawings. However, this application is not limited to the foregoing specific implementations. The foregoing specific implementations are merely examples, but are not limitative. Inspired by this application, persons of ordinary skill in the art may further make many modifications without departing from the purposes of this application and the protection scope of the claims, and all the modifications shall fall within the protection scope of this application.

## Claims

1. A method for obtaining channel state information, comprising:
obtaining, by a terminal, a first parameter configured by a network-side device for each of K channel state information reference signals CSI-RSs, wherein K is an integer greater than 1;
in a case that first parameters of the K CSI-RSs are not completely the same, determining, by the terminal, a first reference CSI-RS from the K CSI-RSs according to a preset rule or an indication of network higher-layer signaling; and
obtaining, by the terminal, channel state information based on a power parameter associated with the first reference CSI-RS, wherein the power parameter is used for obtaining power information needed for calculating the channel state information.

2. The method according to claim 1, wherein the preset rule comprises at least one of the following:
a CSI-RS with a largest CSI-RS identifier among the K CSI-RSs is the first reference CSI-RS;
a CSI-RS with a smallest CSI-RS identifier among the K CSI-RSs is the first reference CSI-RS;
the 1^{st} configured CSI-RS in first configuration signaling is the first reference CSI-RS, wherein the first configuration signaling is used for configuring the K CSI-RSs; or
the last configured CSI-RS in first configuration signaling is the first reference CSI-RS, wherein the first configuration signaling is used for configuring the K CSI-RSs.

3. The method according to claim 1, wherein the method further comprises:
in a case that first parameters of the K CSI-RSs are completely the same, obtaining, by the terminal, channel state information based on a power parameter associated with any one of the K CSI-RSs.

4. The method according to any one of claims 1 to 3, wherein the first parameter comprises at least one of the following:
a first identifier, used for indicating an identifier of a CSI-RS;
a pattern configuration, used for indicating at least one of the following: a symbol position occupied by a CSI-RS in a slot, a subcarrier position occupied by a CSI-RS in a physical resource block PRB, or a frequency-domain position of a CSI-RS in a carrier or a bandwidth part BWP;
a power parameter, used for indicating power information associated with a CSI-RS; or
a second identifier, used for indicating a scrambling identifier associated with a CSI-RS.

5. The method according to any one of claims 1 to 4, wherein before the obtaining channel state information, the method further comprises:
determining, by the terminal, a transmitting order of the K CSI-RSs.

6. The method according to claim 5, wherein the determining, by the terminal, a transmitting order of the K CSI-RSs comprises:
obtaining, by the terminal, a second parameter m that is configured or associated by the network-side device through first higher-layer signaling; and
determining, by the terminal, the transmitting order of the K CSI-RSs based on the second parameter m and a first default rule, wherein a separation between transmitting time-domain positions associated with two adjacent CSI-RSs is m first time-domain units.

7. The method according to claim 6, wherein the first default rule comprises at least one of the following:
the K CSI-RSs are sequentially sent in descending order of CSI-RS identifiers of the CSI-RSs;
the K CSI-RSs are sequentially sent in ascending order of CSI-RS identifiers of the CSI-RSs;
the K CSI-RSs are sequentially sent from the earliest to the latest according to a configuration order of the CSI-RSs; or
the K CSI-RSs are sequentially sent from the latest to the earliest according to a configuration order of the CSI-RSs.

8. The method according to claim 5, wherein the determining, by the terminal, a transmitting order of the K CSI-RSs comprises:
obtaining, by the terminal, a second parameter m configured for or associated with the K CSI-RSs and a third parameter e configured for or associated with each CSI-RS, wherein the second parameter m and the third parameter e are used for indicating that a separation between a transmitting time-domain position associated with a CSI-RS and a target time-domain position is m×e first time-domain units, and the target time-domain position comprises one of the following: a transmitting time-domain position associated with the 1^{st} sent CSI-RS, or a reference time-domain position;
obtaining, by the terminal based on the second parameter m and the third parameter e that are associated with each CSI-RS, a first time-domain unit offset value corresponding to each CSI-RS;
obtaining, by the terminal based on the first time-domain unit offset value corresponding to each CSI-RS, a transmitting time-domain position associated with each CSI-RS; and
determining, by the terminal, that the K CSI-RSs are to be sent in ascending order of the first time-domain unit offset values.

9. The method according to claim 5, wherein the determining, by the terminal, a transmitting order of the K CSI-RSs comprises:
obtaining, by the terminal, a fourth parameter d configured by the network-side device for each CSI-RS, wherein the fourth parameter d is used for the terminal to obtain a transmitting time-domain position of the CSI-RS;
obtaining, by the terminal based on the fourth parameter d of each CSI-RS, a first time-domain unit offset value corresponding to each CSI-RS;
obtaining, by the terminal based on the first time-domain unit offset value corresponding to each CSI-RS, a transmitting time-domain position associated with each CSI-RS; and
determining, by the terminal, that the K CSI-RSs are to be sent in ascending order of the first time-domain unit offset values.

10. The method according to any one of claims 6 to 9, wherein in a case that the first time-domain unit is a symbol, the terminal determines that no time-domain symbol position is configured in a pattern configuration associated with the K CSI-RSs, or the terminal determines that a part or all of time-domain symbol positions configured in a pattern configuration associated with the K CSI-RSs are invalid.

11. The method according to claim 10, wherein a time-domain symbol position associated with the 1^{st} sent CSI-RS among the K CSI-RSs is determined according to a second default rule.

12. The method according to claim 11, wherein the second default rule comprises at least one of the following:
the time-domain symbol position associated with the 1^{st} sent CSI-RS is the 1^{st} time-domain symbol in an associated slot; or
the time-domain symbol position associated with the 1^{st} sent CSI-RS is a time-domain symbol position configured in a pattern of the CSI-RS.

13. The method according to claim 5, wherein the method further comprises:
in a case that the network-side device configures patterns associated with CSI-RSs among the K CSI-RSs to be not completely the same or symbol indexes associated with CSI-RSs to be not completely the same, determining, by the terminal, that a symbol separation between a symbol index associated with any CSI-RS and a first reference symbol index does not exceed a first value.

14. The method according to claim 13, wherein the symbol index associated with the any CSI-RS is not less than 0 and not greater than N-1, wherein N is a quantity of symbols in a slot; or the any CSI-RS is sent within a slot or does not exceed a transmitting slot indicated by the network-side device.

15. The method according to claim 13, wherein the first value is determined based on a capability fed back by the terminal.

16. The method according to claim 15, wherein in a case that transmitting symbols configured by the network-side device for the K CSI-RSs do not meet the capability fed back by the terminal, the terminal skips feeding back channel state information or skips updating channel state information.

17. The method according to claim 13, wherein the terminal determines the first reference symbol index based on a configuration of the network-side device or a third default rule.

18. The method according to claim 17, wherein the third default rule comprises: the first reference symbol index is a symbol index associated with the 1^{st} CSI-RS sent or configured by the network-side device.

19. The method according to claim 5, wherein the method further comprises:
in a case that the network-side device configures patterns associated with CSI-RSs among the K CSI-RSs to be not completely the same or symbol indexes associated with CSI-RSs to be not completely the same, determining, by the terminal, that a symbol separation between time-domain positions associated with two adjacently sent or configured CSI-RSs is any value within [m×N-y, m×N+y], wherein m indicates a quantity of slots between time-domain positions associated with two adjacent CSI-RSs, N is a quantity of symbols in a slot, and y is a second value.

20. The method according to claim 19, wherein a symbol index associated with any CSI-RS is not less than 0 and not greater than N-1, wherein N is a quantity of symbols in a slot; or the any CSI-RS is sent within a slot or does not exceed a transmitting slot indicated by the network-side device.

21. The method according to claim 19, wherein the second value is determined based on a capability fed back by the terminal.

22. The method according to claim 21, wherein in a case that a transmitting symbol separation, configured by the network-side device, between two adjacently sent or configured CSI-RSs among the K CSI-RSs is beyond [m×N-y, m×N + y], the terminal skips feeding back channel state information or skips updating channel state information.

23. The method according to claim 5, wherein before the obtaining channel state information, the method further comprises:
determining, by the terminal, a frequency-domain resource position associated with each of the K CSI-RSs.

24. The method according to claim 23, wherein a separation between a frequency-domain resource position associated with any CSI-RS and a first reference frequency-domain resource position does not exceed a third value.

25. The method according to claim 24, wherein in a case that frequency-domain resource positions configured by the network-side device for the K CSI-RSs do not meet a capability fed back by the terminal, the terminal skips feeding back channel state information or skips updating channel state information.

26. The method according to claim 24, wherein the terminal determines the first reference frequency-domain resource position based on a configuration of the network-side device or a fourth default rule.

27. The method according to claim 26, wherein the fourth default rule comprises: a first reference frequency-domain resource index is a frequency-domain resource index associated with the 1^{st} CSI-RS sent or configured by the network-side device.

28. A method for determining a CSI-RS transmitting order, comprising:
obtaining, by a terminal, a configuration parameter configured by a network-side device for K CSI-RSs, wherein K is an integer greater than 1; and
determining, by the terminal, a transmitting order of the K CSI-RSs based on first information, wherein the first information comprises at least one of the following: configuration information of the network-side device or a default rule.

29. The method according to claim 28, wherein the determining, by the terminal, a transmitting order of the K CSI-RSs based on first information comprises:
obtaining, by the terminal, a second parameter m that is configured or associated by the network-side device through first higher-layer signaling; and
obtaining, by the terminal, the transmitting order of the K CSI-RSs based on the second parameter m and a first default rule, wherein a separation between transmitting time-domain positions associated with two adjacent CSI-RSs is m first time-domain units.

30. The method according to claim 29, wherein the first default rule comprises at least one of the following:
the K CSI-RSs are sequentially sent in descending order of CSI-RS identifiers of the CSI-RSs;
the K CSI-RSs are sequentially sent in ascending order of CSI-RS identifiers of the CSI-RSs;
the K CSI-RSs are sequentially sent from the earliest to the latest according to a configuration order of the CSI-RSs; or
the K CSI-RSs are sequentially sent from the latest to the earliest according to a configuration order of the CSI-RSs.

31. The method according to claim 28, wherein the determining, by the terminal, a transmitting order of the K CSI-RSs based on first information comprises:
obtaining, by the terminal, a second parameter m configured for or associated with the K CSI-RSs and a third parameter e configured for or associated with each CSI-RS, wherein the second parameter m and the third parameter e are used for indicating that a separation between a transmitting time-domain position associated with a CSI-RS and a target time-domain position is m×e first time-domain units, and the target time-domain position comprises one of the following: a transmitting time-domain position associated with the 1^{st} sent CSI-RS, or a reference time-domain position;
obtaining, by the terminal based on the second parameter m and the third parameter e that are associated with each CSI-RS, a first time-domain unit offset value corresponding to each CSI-RS;
obtaining, by the terminal based on the first time-domain unit offset value corresponding to each CSI-RS, a transmitting time-domain position associated with each CSI-RS; and
determining, by the terminal, that the K CSI-RSs are to be sent in ascending order of the first time-domain unit offset values.

32. The method according to claim 28, wherein the determining, by the terminal, a transmitting order of the K CSI-RSs based on first information comprises:
obtaining, by the terminal, a fourth parameter d configured by the network-side device for each CSI-RS, wherein the fourth parameter d is used for the terminal to obtain a transmitting time-domain position of the CSI-RS;
obtaining, by the terminal based on the fourth parameter d of each CSI-RS, a first time-domain unit offset value corresponding to each CSI-RS;
obtaining, by the terminal based on the first time-domain unit offset value corresponding to each CSI-RS, a transmitting time-domain position associated with each CSI-RS; and
determining, by the terminal, that the K CSI-RSs are to be sent in ascending order of the first time-domain unit offset values.

33. The method according to any one of claims 30 to 33, wherein in a case that the first time-domain unit is a symbol, the terminal determines that no time-domain symbol position is configured in a pattern configuration associated with the K CSI-RSs, or the terminal determines that a part or all of time-domain symbol positions configured in a pattern configuration associated with the K CSI-RSs are invalid.

34. The method according to claim 33, wherein a time-domain symbol position associated with the 1^{st} sent CSI-RS among the K CSI-RSs is determined according to a second default rule.

35. The method according to claim 34, wherein the second default rule comprises at least one of the following:
the time-domain symbol position associated with the 1^{st} sent CSI-RS is the 1^{st} time-domain symbol in an associated slot; or
the time-domain symbol position associated with the 1^{st} sent CSI-RS is a time-domain symbol position configured in a pattern of the CSI-RS.

36. The method according to claim 28, wherein the method further comprises:
in a case that the network-side device configures patterns associated with CSI-RSs among the K CSI-RSs to be not completely the same or symbol indexes associated with CSI-RSs to be not completely the same, determining, by the terminal, that a symbol separation between a symbol index associated with any CSI-RS and a first reference symbol index does not exceed a first value.

37. The method according to claim 36, wherein the symbol index associated with the any CSI-RS is not less than 0 and not greater than N-1, wherein N is a quantity of symbols in a slot; or the any CSI-RS is sent within a slot or does not exceed a transmitting slot indicated by the network-side device.

38. The method according to claim 36, wherein the first value is determined based on a capability fed back by the terminal.

39. The method according to claim 38, wherein the method further comprises: in a case that transmitting symbols configured by the network-side device for the K CSI-RSs do not meet the capability fed back by the terminal, the terminal skips feeding back channel state information or skips updating channel state information.

40. The method according to claim 36, wherein the first reference symbol index is determined by the terminal based on a configuration of the network-side device or a third default rule.

41. The method according to claim 40, wherein the third default rule comprises: the first reference symbol index is a symbol index associated with the 1^{st} CSI-RS sent or configured by the network-side device.

42. The method according to claim 28, wherein the method further comprises:
in a case that the network-side device configures patterns associated with CSI-RSs among the K CSI-RSs to be not completely the same or symbol indexes associated with CSI-RSs to be not completely the same, determining, by the terminal, that a symbol separation between time-domain positions associated with two adjacently sent or configured CSI-RSs is any value within [m×N-y, m×N+y], wherein m indicates a quantity of slots between time-domain positions associated with two adjacent CSI-RSs, N is a quantity of symbols in a slot, and y is a second value.

43. The method according to claim 42, wherein a symbol index associated with any CSI-RS is not less than 0 and not greater than N-1, wherein N is a quantity of symbols in a slot; or the any CSI-RS is sent within a slot or does not exceed a transmitting slot indicated by the network-side device.

44. The method according to claim 42, wherein the second value is determined based on a capability fed back by the terminal.

45. The method according to claim 21, wherein the method further comprises: in a case that a transmitting symbol separation, configured by the network-side device, between two adjacently sent or configured CSI-RSs among the K CSI-RSs is beyond [m×N-y, m×N + y], the terminal skips feeding back channel state information or skips updating channel state information.

46. The method according to claim 28, wherein the method further comprises:
determining, by the terminal, a frequency-domain resource position associated with each of the K CSI-RSs.

47. The method according to claim 46, wherein a separation between a frequency-domain resource position associated with any CSI-RS and a first reference frequency-domain resource position does not exceed a third value.

48. The method according to claim 47, wherein in a case that frequency-domain resource positions configured by the network-side device for the K CSI-RSs do not meet a capability fed back by the terminal, the terminal skips feeding back channel state information or skips updating channel state information.

49. The method according to claim 47, wherein the terminal determines the first reference frequency-domain resource position based on a configuration of the network-side device or a fourth default rule.

50. The method according to claim 49, wherein the fourth default rule comprises: a first reference frequency-domain resource index is a frequency-domain resource index associated with the 1^{st} CSI-RS sent or configured by the network-side device.

51. A CSI-RS configuration method, comprising:
configuring, by a network-side device, a first parameter of each of K channel state information reference signals CSI-RSs for a terminal, wherein K is an integer greater than 1, wherein
in a case that first parameters of the K CSI-RSs are not completely the same, the terminal is indicated to determine a first reference CSI-RS from the K CSI-RSs according to a preset rule or an indication of network higher-layer signaling, and then obtain channel state information based on a power parameter associated with the first reference CSI-RS, wherein the power parameter is used for obtaining power information needed for calculating the channel state information.

52. The method according to claim 51, wherein the first parameter comprises at least one of the following:
a first identifier, used for indicating an identifier of a CSI-RS;
a pattern configuration, used for indicating at least one of the following: a symbol position occupied by a CSI-RS in a slot, a subcarrier position occupied by a CSI-RS in a physical resource block PRB, or a frequency-domain position of a CSI-RS in a carrier or a bandwidth part BWP;
a power parameter, used for indicating power information associated with a CSI-RS; or
a second identifier, used for indicating a scrambling identifier associated with a CSI-RS.

53. The method according to claim 51 or 52, wherein the method further comprises: configuring, by the network-side device for the terminal, configuration information for determining a transmitting order of the K CSI-RSs.

54. The method according to claim 53, wherein the configuring, by the network-side device for the terminal, configuration information for determining a transmitting order of the K CSI-RSs comprises one of the following:
configuring or associating, by the network-side device, a second parameter m for the K CSI-RSs through first higher-layer signaling, wherein the second parameter m is used for indicating that a separation between transmitting time-domain positions associated with two adjacent CSI-RSs is m first time-domain units;
configuring or associating, by the network-side device, a second parameter m for the K CSI-RSs and configuring or associating a third parameter e for each CSI-RS through second higher-layer signaling, wherein the third parameter e is used for indicating that a separation between a transmitting time-domain position associated with a CSI-RS and a target time-domain position is m×e first time-domain units, and the target time-domain position comprises one of the following: a transmitting time-domain position associated with the 1^{st} sent CSI-RS, or a reference time-domain position; or
configuring, by the network-side device, a fourth parameter d for each CSI-RS through third higher-layer signaling, wherein the fourth parameter d is used for the terminal to obtain a transmitting time-domain position of the CSI-RS.

55. A method for indicating a CSI-RS transmitting order, comprising:
configuring, by a network-side device, K channel state information reference signals CSI-RSs for a terminal, wherein K is an integer greater than 1; and
configuring, by the network-side device for the terminal, configuration information for determining a transmitting order of the K CSI-RSs.

56. The method according to claim 55, wherein the configuring, by the network-side device for the terminal, configuration information for determining a transmitting order of the K CSI-RSs comprises one of the following:
configuring or associating, by the network-side device, a second parameter m for the K CSI-RSs through first higher-layer signaling, wherein the second parameter m is used for indicating that a separation between transmitting time-domain positions associated with two adjacent CSI-RSs is m first time-domain units;
configuring or associating, by the network-side device, a second parameter m for the K CSI-RSs and configuring or associating a third parameter e for each CSI-RS through second higher-layer signaling, wherein the third parameter e is used for indicating that a separation between a transmitting time-domain position associated with a CSI-RS and a target time-domain position is m×e first time-domain units, and the target time-domain position comprises one of the following: a transmitting time-domain position associated with the 1^{st} sent CSI-RS, or a reference time-domain position; or
configuring, by the network-side device, a fourth parameter d for each CSI-RS through third higher-layer signaling, wherein the fourth parameter d is used for the terminal to obtain a transmitting time-domain position of the CSI-RS.

57. An apparatus for obtaining channel state information, comprising:
a first obtaining module, configured to obtain a first parameter configured by a network-side device for each of K channel state information reference signals CSI-RSs, wherein K is an integer greater than 1;
a first determining module, configured to: in a case that first parameters of the K CSI-RSs are not completely the same, determine a first reference CSI-RS from the K CSI-RSs according to a preset rule or an indication of network higher-layer signaling; and
a second obtaining module, configured to obtain channel state information based on a power parameter associated with the first reference CSI-RS, wherein the power parameter is used for obtaining power information needed for calculating the channel state information.

58. An apparatus for determining a CSI-RS transmitting order, comprising:
a third obtaining module, configured to obtain a configuration parameter configured by a network-side device for K CSI-RSs, wherein K is an integer greater than 1; and
a second determining module, configured to determine a transmitting order of the K CSI-RSs based on first information, wherein the first information comprises at least one of the following: configuration information of the network-side device or a default rule.

59. A CSI-RS configuration apparatus, comprising:
a fourth obtaining module, configured to obtain a first parameter of each of K CSI-RSs, wherein K is an integer greater than 1; and
a first configuration module, configured to configure the first parameter of each of the K CSI-RSs for a terminal, wherein in a case that first parameters of the K CSI-RSs are not completely the same, the terminal is indicated to determine a first reference CSI-RS from the K CSI-RSs according to a preset rule or an indication of network higher-layer signaling, and then obtain channel state information based on a power parameter associated with the first reference CSI-RS, wherein the power parameter is used for obtaining power information needed for calculating the channel state information.

60. An apparatus for indicating a CSI-RS transmitting order, comprising:
a second configuration module, configured to configure K channel state information reference signals CSI-RSs for a terminal, wherein K is an integer greater than 1; and
a third configuration module, configured to configure, for the terminal, configuration information for determining a transmitting order of the K CSI-RSs.

61. A terminal, comprising a processor and a memory, wherein the memory stores a program or instructions capable of running on the processor, and when the program or the instructions are executed by the processor, the steps of the method for obtaining channel state information according to any one of claims 1 to 27 are implemented, or the steps of the method for determining a CSI-RS transmitting order according to any one of claims 28 to 50 are implemented.

62. A network-side device, comprising a processor and a memory, wherein the memory stores a program or instructions capable of running on the processor, and when the program or the instructions are executed by the processor, the steps of the CSI-RS configuration method according to any one of claims 51 to 54 are implemented, or the steps of the method for determining a CSI-RS transmitting order according to any one of claims 55 to 56 are implemented.

63. A readable storage medium, wherein the readable storage medium stores a program or instructions, and when the program or the instructions are executed by a processor, the steps of the method for obtaining channel state information according to any one of claims 1 to 27 are implemented, or the steps of the method for determining a CSI-RS transmitting order according to any one of claims 28 to 50 are implemented, or the steps of the CSI-RS configuration method according to any one of claims 51 to 54 are implemented, or the steps of the method for determining a CSI-RS transmitting order according to any one of claims 55 to 56 are implemented.
